# EUROPEAN PATENT APPLICATION

(11) **EP 4 621 122 A2**
(43) Date of publication of application: **24.09.2025**
(21) Application number: 24788930.6
(22) Date of filing: 27.03.2024
(51) Int. Cl.: D06F 58/22, D06F 58/24, D06F 58/26, B01D 35/02, B01D 33/46, D06F 105/34

(54) **CLOTHING TREATMENT DEVICE**

(30) Priority: 13.04.2023 KR 20230048805
(71) Applicant: LG Electronics Inc., Yeongdeungpo-gu Seoul 07336 (KR)
(72) Inventor: KIM, Jeongyun, Seoul 08592 (KR); RYOO, Byeongjo, Seoul 08592 (KR)
(74) Representative: Vossius & Partner Patentanwälte Rechtsanwälte mbB
(86) International application number: PCT/KR2024/003849
(87) International publication number: WO 2024/214987

(57) **Abstract**

The present invention relates to a clothing treatment device and comprises: a cabinet having an opening in the front thereof; a drum which has an inlet in communication with the opening, and accommodates clothing; a driving part which is accommodated inside the cabinet and rotates the drum; a circulation duct which circulates, outside the drum, air discharged from the inlet and resupplies same to the drum; a heat supply part comprising at least one heat exchanger which is provided inside the circulation duct and condenses moisture in air, or heats air; a mounting part which is provided so that the inlet and the circulation duct are in communication, and guides air inside the drum to the circulation duct; and a filter part for filtering foreign matters from air by being detachably provided on the mounting part and comprising an external filter which is seated on the mounting part and filters foreign matters introduced to the circulation duct, and an internal filter which is provided so that at least a portion thereof can be accommodated in the external filter, and is mounted on the mounting part, wherein the internal filter comprises: an accommodation body which is inserted into the external filter and has a mesh part for filtering lint introduced to the inside; a support body provided above the accommodation body and placed on the external filter; and a pressurization part which is provided, to be able to reciprocate, on the support body, and captures, inside the accommodation body, the lint filtered in the accommodation body.

## Description

### [Technical Field]

The present disclosure relates to a laundry treatment apparatus, and more specifically, to a laundry treatment apparatus having a filter cartridge for filtering foreign substances in air.

### [Background Art]

In general, a laundry dryer refers to an apparatus that puts laundry that has been washed and dehydrated into a drum (or a tub) of the dryer and supplies hot air into the drum to evaporate moisture in the laundry and dry the laundry.

Air that escapes after evaporating the moisture of the laundry from the drum of the laundry dryer contains the moisture of the laundry inside the drum, and thus, becomes hot and humid air. In this regard, the dryers may be classified based on a scheme of handling such hot and humid air. In other words, the dryers may be classified into a condensation-type dryer that condenses the moisture contained in hot and humid air by allowing heat exchange to occur in a heat exchanger while hot and humid air circulates without being discharged to the outside of the dryer, and an exhaust-type dryer that discharges hot and humid air that has passed through the drum directly to the outside.

In one example, air coming out of the drum after being used to dry an object-to-be-dried may contain foreign substances such as lint from the object-to-be-dried. Such foreign substances may cause malfunctions as they pass through mechanical components of the laundry dryer or may contaminate outside air when they are discharged to the outside. Therefore, air that has passed through the drum must pass through a filter to remove the foreign substances.

Generally, the filter is disposed in front of the drum and filters the foreign substances contained in air that has passed through the drum. In this regard, when the dryer is used continuously, the foreign substances such as the lint accumulate in the filter.

When such foreign substances accumulate to a level equal to or higher than a certain level, they interfere with a flow of air, such that cleaning is performed regularly. Such cleaning of the filter is performed by a user removing the filter from the laundry dryer after a drying cycle is completed, then removing the foreign substances, and then installing the filter back into the laundry dryer.

However, the above-mentioned cleaning is not only cumbersome because it should be performed by the user by hand, but also not able to be performed every time the drying is performed, such that sufficient air volume necessary for the drying is not able to be secured as the flow of air is gradually interrupted until the cleaning is performed.

As a means to solve such problem, a filter device that automatically cleans the filter continuously in addition to the regular filter cleaning has been developed. Korean Patent Application Publication No. 10-2011-0123346 (publication date: November 15, 2011, name: dryer, hereinafter referred to as "prior art") discloses a dryer including a filter cleaner 140 for automatically cleaning the filter.

Such filter cleaner is composed of a brush that is in contact with the filter to clean the lint, and a driving motor for driving the brush. As the brush rotates by a rotational force of the driving motor, the foreign substances on a filter surface are dropped and removed.

However, in the case of prior art, the filter cleaner is mounted at a center of the filter with a symmetrical shape. Accordingly, the filter cleaner rotates along a circular orbit or is driven along a symmetrical reciprocating rotation orbit.

However, in general, the dryer is equipped with the drum at a center of a main body, and a blowing fan that causes the flow of air in the drum mounted next to the drum in the main body. This is to efficiently arrange internal components while minimizing a volume of the dryer.

In this regard, the filter is mounted between the drum and the blowing fan on a flow channel. Therefore, air containing the foreign substances that is discharged from the drum and passes through the filter is affected by the blowing fan. As mentioned above, as the blowing fan is located next to the drum for the space efficiency of the dryer, air passing through the filter also flows biased to one side under the influence of the blowing fan.

Therefore, in a case of the existing symmetrical filter, a portion where the foreign substances such as the lint accumulate is distributed biased from the center of the filter to the blowing fan side. In particular, in a case of an auto filter, the foreign substances that are removed from the filter surface by the brush and accumulate on a bottom surface are concentrated on one side, and a lot of free space is created on the other side.

In other words, in the case of the existing symmetrical filter or auto filter, because a location of the blowing fan is not considered, the filter is not able to be used efficiently, such that the filter should be cleaned early or the air volume is reduced early.

### [Disclosure]

### [Technical Problem]

The present disclosure was created to solve the above problems, and is to provide a laundry treatment apparatus that may compress lint loaded in a filter, which filters the lint that occurs during laundry treatment, inside the filter to secure a flow channel of a filter.

In addition, the present disclosure was created to solve the above problems, and is to provide a laundry treatment apparatus that may compress lint loaded in a filter, which filters the lint that occurs during laundry treatment, inside the filter to reduce the number of cleaning times of the filter.

In addition, the present disclosure was created to solve the above problems, and is to provide a laundry treatment apparatus that may compress lint inside a filter by improving a structure of the filter that filters the lint that occurs during laundry treatment.

### [Technical Solution]

To achieve these objects and other advantages and in accordance with the purpose of the disclosure, as embodied and broadly described herein, a laundry treatment apparatus may include a cabinet having an opening at a front side, a drum provided with an inlet communicating with the opening and configured to accommodate laundry, a driver accommodated inside the cabinet to rotate the drum, a circulation duct arranged to circulate air, discharged from the inlet, outside the drum and resupply the air to the drum, a heat supply part including one or more heat exchangers arranged inside the circulation duct to condense moisture from the air or heat the air, a mounting portion arranged to guide air inside the drum into the circulation duct by allowing the inlet to communicate with the circulation duct, a filter detachably provided on the mounting portion to filter out foreign substances from the air, the filter including an outer filter seated on the mounting portion to filter out foreign substances introduced into the circulation duct, and an inner filter arranged to be at least partially accommodated in the outer filter and mounted on the mounting portion.

The inner filter may include an accommodation body including a mesh portion inserted into the outer filter and configured to filter out introduced lint, a support body arranged on the accommodation body and mounted on the outer filter, the support body extending in an arc shape according to a shape of the inlet, and a compression part arranged on the support body to be reciprocally movable and configured to collect lint filtered in the accommodation body.

The compression part may include a movable part reciprocally moved along a longitudinal direction of the support body, and a brush part detachably coupled to the movable part on an inner side of the support body and rotated inside the accommodation body according to rotation of the movable part.

Here, the support body may include an open surface allowing air and lint to be introduced into the support body therethrough, a mesh-shaped blocking rib provided on the open surface, and a movement groove formed on one side of the support body to guide reciprocating movement of the compression part along a shape of the support body.

Also, the movable part may include a guide groove slidably coupled to the movement groove, a rotation knob extending from an upper portion of the movable part to an outer side of the support body, and a brush fastening portion provided at a lower portion of the movable part to allow the brush part to be fastened thereto.

The brush part may include an insertion portion inserted into and coupled to the brush fastening portion, a brush body extending from the insertion portion into the accommodation body, a first brush disposed on one surface of the brush body, and a second brush disposed on an opposite surface of the brush body.

Further, the insertion portion is inserted into the brush fastening portion to be movable in a radial direction of the movable part. The laundry treatment apparatus may further include a spring arranged between the brush fastening portion and the insertion portion to elastically support the brush part in the radial direction of the movable part.

Further, the accommodation body may include a first accommodation body provided with a mesh portion facing the first brush, and a second accommodation body provided with a mesh portion facing the second brush, wherein each of the first and second accommodation bodies may be provided with a plurality of reinforcing ribs arranged in a direction parallel to the brush part to enhance strength.

The reinforcing ribs may include a plurality of lint protrusions arranged facing the first and second brushes to restrict movement of lint moved by the first and second brushes.

The lint protrusions may be spaced apart from each other by a predetermined distance in a longitudinal direction of the reinforcing ribs, wherein the first and second brushes may be spaced apart from each other by a predetermined distance corresponding to the distance between the lint protrusions.

Here, each of the lint protrusions may include an inclined surface extending outwardly upward with respect to a center of the accommodation body, and a catch surface extending perpendicular to the reinforcing ribs with respect to an outer side of the accommodation body.

Further, a lower portion of the first accommodation body may include a lower mesh portion connecting the first accommodation body and the second accommodation body.

Here, the brush body further may include a third brush extending from a lower portion thereof to the lower mesh portion.

The lower mesh portion may include a lower frame having a lower mesh and connecting the first and second accommodation bodies, a lower reinforcing rib arranged to reinforce the lower frame, and a lower lint protrusion formed on the lower reinforcing rib to restrict movement of lint moved by the third brush.

The reinforcing ribs may be formed to extend in a radial direction with respect to a center of rotation of the movable part to correspond rotation of the brush part.

Here, the outer filter may include a seating body seated on the mounting portion, an insertion body extending from the seating body and provided with a mesh member to filter foreign substances, the insertion body having at least a portion inserted into the mounting portion, and an elastic member coupled to the seating body and configured to separate the seating body from the mounting portion.

In another aspect of the present disclosure, a laundry treatment apparatus may include a cabinet having an opening at a front side, a drum provided with an inlet communicating with the opening and configured to accommodate laundry, a driver accommodated inside the cabinet to rotate the drum, a circulation duct arranged to circulate air, discharged from the inlet, outside the drum and resupply the air to the drum, a heat supply part including one or more heat exchangers arranged inside the circulation duct to condense moisture from the air or heat the air, a mounting portion arranged to guide air inside the drum into the circulation duct by allowing the inlet to communicate with the circulation duct, a filter detachably provided on the mounting portion to filter out foreign substances from the air, the filter including an outer filter seated on the mounting portion to filter out foreign substances introduced into the circulation duct, and an inner filter arranged to be at least partially accommodated in the outer filter and mounted on the mounting portion.

Here, the inner filter may include an accommodation body including a mesh portion inserted into the outer filter and configured to filter out introduced lint, a support body arranged on the accommodation body and mounted on the outer filter, and a compression part arranged on the support body to be reciprocally movable and configured to collect lint filtered in the accommodation body.

The compression part may include a movable part arranged to move along a movement groove, a movement shaft provided on an inner side of the support body and disposed in a longitudinal direction of the support body, and a brush part configured to reciprocally move inside the accommodation body along the movement shaft in response to movement of the movable part.

The movable part may include a movement guide moved along the movement shaft inside the support body, a movement knob provided at an upper portion of the movement guide and extending to an outside of the support body through the movement groove, and a lifting guide coupled to a lower portion of the movement guide so as to be vertically movable.

Here, the movement guide may include a through-hole configured to receive the movement shaft movably inserted thereinto, and a lifting space formed in a lower portion of the movement guide to allow the lifting guide to vertically movably fastened thereto.

The lifting guide may be provided with a fastening space vertically movably disposed in the lifting space, wherein the brush part may be detachably fastened to the fastening space.

Further, the movable part further may include a fixing guide hingedly coupled to the movement guide to prevent the lifting guide from being separated.

Here, the fixing guide may include a hinge hingedly coupled to the movement guide, and a compressing part extending from the hinge toward the lifting guide to prevent the lifting guide from being separated.

The brush part may include a fastening part detachably inserted into the fastening space, a brush body extending from the fastening part into the accommodation body, a first brush disposed on one surface of the brush body, and a second brush disposed on an opposite surface of the brush body.

Here, the accommodation body may include a first accommodation body provided with a mesh portion facing the first brush, and a second accommodation body provided with a mesh portion facing the second brush, wherein each of the first and second accommodation bodies may be provided with a plurality of reinforcing ribs arranged in a direction parallel to the brush part to enhance strength.

Further, the reinforcing ribs may include a plurality of lint protrusions arranged facing the first and second brushes to restrict movement of lint moved by the first and second brushes.

Further, the lint protrusions may be spaced apart from each other by a predetermined distance in a longitudinal direction of the reinforcing ribs, wherein the first and second brushes may be spaced apart from each other by a predetermined distance corresponding to the distance between the lint protrusions.

Further, each of the lint protrusions may include an inclined surface extending outwardly upward with respect to a center of the accommodation body, and a catch surface extending perpendicular to the reinforcing ribs with respect to an outer side of the accommodation body.

The inner filter may further include an auxiliary filter disposed in a lower portion of the accommodation space in a longitudinal direction of the accommodation space to filter out lint, wherein the brush part may further include a third brush extending toward the auxiliary filter.

Here, the auxiliary filter may include an auxiliary filter frame provided with an auxiliary filter mesh, the auxiliary filter frame corresponding to an inner lower surface of the accommodation space, a reinforcing rib arranged to reinforce the auxiliary filter frame, and a lower lint protrusion formed on the reinforcing rib to restrict movement of lint moved by the third brush.

In another aspect of the present disclosure, a laundry treatment apparatus may include a cabinet having an opening at a front side, a drum provided with an inlet communicating with the opening and configured to accommodate laundry, a driver accommodated inside the cabinet to rotate the drum, a circulation duct arranged to circulate air, discharged from the inlet, outside the drum and resupply the air to the drum, a heat supply part including one or more heat exchangers arranged inside the circulation duct to condense moisture from the air or heat the air, a mounting portion arranged to guide air inside the drum into the circulation duct by allowing the inlet to communicate with the circulation duct, a filter detachably provided on the mounting portion to filter out foreign substances from the air, the filter including an outer filter seated on the mounting portion to filter out foreign substances introduced into the circulation duct, and an inner filter arranged to be at least partially accommodated in the outer filter and mounted on the mounting portion.

Here, the inner filter may include an accommodation body including a mesh portion inserted into the outer filter and configured to filter out introduced lint, a support body arranged on the accommodation body and mounted on the outer filter, and a compression part arranged on the support body to be reciprocally movable and configured to collect lint filtered in the accommodation body.

The compression part may include a movement shaft assembly disposed in the accommodation space in a longitudinal direction of the support body, a rotation guide arranged on the support body to rotate in an arc shape along a shape of the support body, a lifting guide reciprocally movable along the movement shaft assembly and vertically movable with respect to the movement shaft assembly according to movement of the rotation guide, and a brush part provided on the lifting guide to reciprocate inside the accommodation body along the lifting guide.

Here, the movement shaft assembly may include a first shaft support fixed on one side in the accommodation space, a second shaft support fixed on an opposite side in the accommodation space, and a movement shaft connecting the first and second shaft supports, wherein the lifting guide may be movably fastened to the movement shaft.

Further, the rotation guide may include a guide groove slidably coupled to the movement groove, and a rotation knob extending from an upper portion of the rotation guide to an outer side of the support body.

Further, the lifting guide may include a lifting slit formed at an upper side to slide along the movement shaft and move vertically with respect to the shaft, and a lifting space formed at a lower side to allow the brush part to be vertically movably inserted thereinto.

One surface of the rotation guide facing the lifting guide may be provided with a rotation shaft groove, and the lifting guide may include a rotation shaft rotatably coupled to the rotation shaft groove. Based on the rotation guide being rotated, the lifting guide may rotate while vertically moving with respect to the movement shaft.

Further, the brush part may include an insertion portion inserted into the lifting space, a brush body extending from the insertion portion into the accommodation body, a first brush disposed on one surface of the brush body, and a second brush disposed on an opposite surface of the brush body.

The lifting guide may include a brush slit allowing the first and second brushes to move during vertical movement of the lifting guide.

The inner filter may further include an auxiliary filter disposed in a lower portion of the accommodation space in a longitudinal direction of the accommodation space to filter out lint, wherein the brush part may further include a third brush extending toward the auxiliary filter.

Here, the accommodation body may include a first accommodation body provided with a mesh portion facing the first brush, and a second accommodation body provided with a mesh portion facing the second brush, wherein each of the first and second accommodation bodies may be provided with a plurality of reinforcing ribs arranged in a direction parallel to the brush part to enhance strength.

The reinforcing ribs may include a plurality of lint protrusions arranged facing the first and second brushes to restrict movement of lint moved by the first and second brushes.

Further, the lint protrusions may be spaced apart from each other by a predetermined distance in a longitudinal direction of the reinforcing ribs, wherein the first and second brushes may be spaced apart from each other by a predetermined distance corresponding to the distance between the lint protrusions.

Further, each of the lint protrusions may include an inclined surface extending outwardly upward with respect to a center of the accommodation body, and a catch surface extending perpendicular to the reinforcing ribs with respect to an outer side of the accommodation body.

### [Advantageous Effects]

According to the laundry treatment apparatus according to the embodiment of the preset disclosure, the lint loaded in the filter, which filters the lint that occurs during the laundry treatment, may be compressed inside the filter to secure the flow channel of the filter.

Further, according to the laundry treatment apparatus according to the embodiment of the preset disclosure, the lint loaded in the filter, which filters the lint that occurs during the laundry treatment, may be compressed inside the filter to reduce the number of cleaning times of the filter.

Further, according to the laundry treatment apparatus according to the embodiment of the preset disclosure, the lint may be compressed inside the filter by improving the structure of the filter that filters the lint that occurs during the laundry treatment.

### [Description of Drawings]

FIG. 1 is a perspective view illustrating an exterior of a laundry treatment apparatus according to the present disclosure.
FIG. 2 is a schematic view illustrating the internal structure of the laundry treatment apparatus according to the present disclosure.
FIG. 3 is a perspective view illustrating a filter part according to the present disclosure.
FIG. 4 is a perspective view illustrating a filter part according to the present disclosure.
FIG. 5 is an exploded view illustrating an inner filter according to one embodiment of the present disclosure.
FIG. 6 is an exploded view illustrating engagement of a brush part according to one embodiment of the present disclosure.
FIG. 7 is a view illustrating the operation of the inner filter according to one embodiment of the present disclosure.
FIG. 8 is an enlarged perspective view illustrating a portion of the brush part and an accommodation body according to one embodiment of the present disclosure.
FIG. 9 is a perspective view illustrating the mounting of a auxiliary filter according to one embodiment of the present disclosure.
FIG. 10 is a perspective view illustrating a lint accumulation indicator of the inner filter according to one embodiment of the present disclosure.
FIG. 11 is a schematic view illustrating the structure of an inner filter according to another embodiment of the present disclosure.
FIG. 12 is an exploded perspective view illustrating the inner filter according to another embodiment of the present disclosure.
FIG. 13 is a view illustrating the operation of the inner filter according to another embodiment of the present disclosure.
FIG. 14 is a schematic diagram illustrating the structure of an inner filter according to yet another embodiment of the present disclosure.
FIG. 15 is an exploded view illustrating the inner filter according to the other embodiment of the present disclosure.
FIG. 16 is a view illustrating the operation of the inner filter according to the other embodiment of the present disclosure.

### [Best Mode]

Hereinafter, embodiments disclosed herein will be described in detail with reference to the attached drawings. Herein, the same or similar reference numerals are assigned to the same or similar components even in different embodiments, and a description thereof is replaced with the first description. As used herein, singular expressions include plural expressions unless the context clearly dictates otherwise. Additionally, when describing the embodiment disclosed herein, when it is determined that a detailed description of related known technology may obscure the gist of the embodiment disclosed herein, the detailed description will be omitted. In addition, it should be noted that the attached drawings are only intended to facilitate understanding of the embodiment disclosed herein, and the technical idea disclosed herein should not be construed as limited by the attached drawings.

Hereinafter, a laundry treatment apparatus according to an embodiment of the present disclosure will be described in detail with reference to the attached drawings.

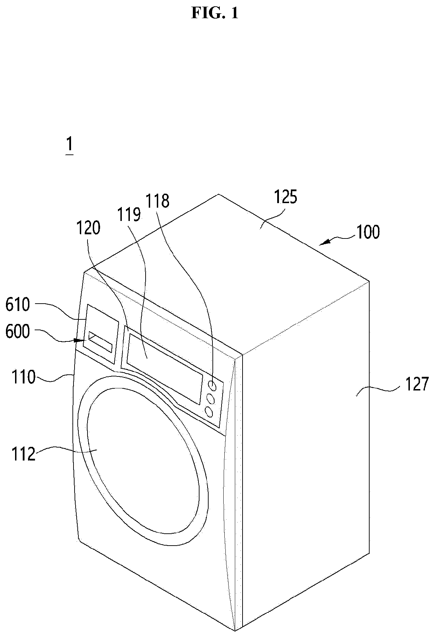

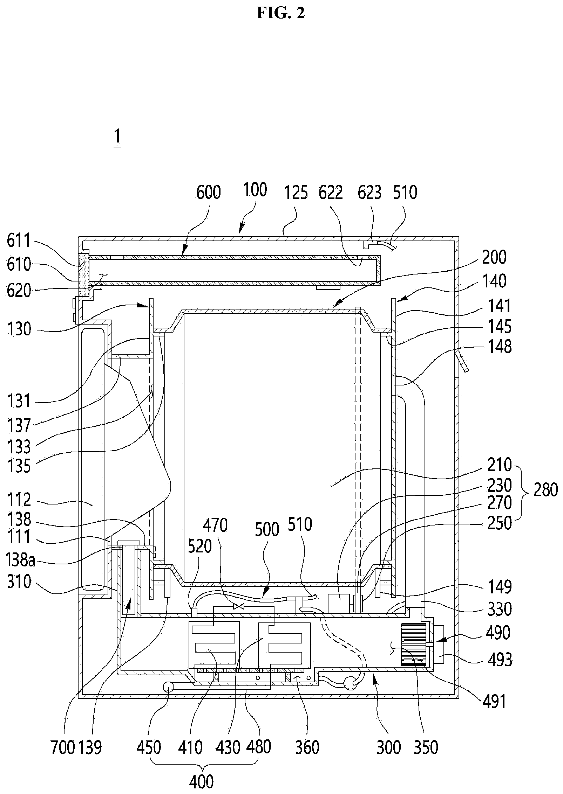

FIG. 1 is a perspective view showing an outer appearance of a laundry treatment apparatus according to the present disclosure, and FIG. 2 is a simplified diagram showing an internal structure of a laundry treatment apparatus according to the present disclosure.

As shown, a laundry treatment apparatus 1 of the present disclosure may include a cabinet 100, a drum 200 rotatably disposed inside the cabinet to provide a space for storing laundry, a circulating duct 300 that forms a flow channel that re-supplies air discharged from the drum 200 to the drum 200, a heat exchanger assembly 400 that dehumidifies and heats air introduced into the circulation duct 300 and then re-supplies the air to the drum 200, and a driver 280 that provides a rotational force to the drum.

The cabinet 100 may include a front panel 110 that forms a front surface of the laundry treatment apparatus 1, an upper panel 125 that forms a top surface, a side panel 127 that forms a side surface, and the like. In this regard, the front panel 110 may include an opening 111 defined to be in communication with the drum 200 and a door 112 pivotably coupled to the cabinet to open and close the opening 111.

In this regard, the front panel 110 has a control panel 120, which may include an input unit 118 that receives a control command from a user and a display 119 that outputs information such as the control command selectable by the user.

In one example, the input unit 118 may include a power supply request unit that requests power supply to the laundry treatment apparatus 1, a course input unit that allows the user to select a desired course among multiple courses, and an execution request unit that requests start of the course selected by the user.

Accordingly, a command for operating the laundry treatment apparatus may be input via the input unit 118, the command may be transmitted to a controller, and the controller may control each electronic component of the laundry treatment apparatus to correspond thereto.

In one example, the display 119 may include at least one of a display panel that may output text and figures, and a speaker that may output a voice signal and sound.

In addition, the control panel 120 may further include the controller (not shown) or be connected to the controller. The controller may control the input unit 118 and the display 119 or control each component such as the driver 280, the heat exchanger assembly 400, a washer 500, and the like, which will be described later.

In one example, the controller may generate the command to operate the laundry treatment apparatus. For example, the controller may control one or more of the driver 280 and the heat exchanger assembly 400 such that the laundry treatment apparatus performs a drying cycle to remove moisture from the laundry.

The drum 200 may have a cylindrical drum body 210 with open front and rear surfaces. In this case, inside the cabinet 100, a first support 130 that forms a front surface of the drum 200 and simultaneously rotatably supports the front surface of the drum body 210, and a second support 140 that rotatably supports the rear surface of the drum body 210 may be disposed.

In this regard, the first support 130 may include a first fixed body 131 fixed inside the cabinet 100, and an inlet 133 that extends through the first fixed body 131 and allows the opening 111 and the interior of the drum body 210 to be in communication with each other.

In addition, the first support 130 may further include a first support body 135 that is disposed on the first fixed body 131 and is inserted into a front portion of the drum body 210. In this regard, the first fixed body 131 may be formed in any shape as long as the inlet 133 and the first support body 135 are formed. The first support body 135 may be formed in a shape of a pipe protruding from the first fixed body 131 toward the drum body 210. A diameter of the first support body 135 may be set to be greater than a diameter of the inlet 133 and smaller than a diameter of a front surface of the drum body 210. In this case, the inlet 133 will be located inside a space defined by the first support body 135.

In one example, the first support 130 may further include a connecting body 137 that connects the opening 111 with the inlet 133. The connecting body 137 may be formed in a shape of a pipe extending from the inlet 133 toward the opening 111. The connecting body 137 may have a mounting portion 138 that is in communication with the circulating duct 300. The mounting portion 138 is a passage that allows air inside the drum body 210 to flow to the circulating duct 300, and is able to extend through the connecting body 137. Additionally, a filter 700, which will be described later, may be inserted and installed in the mounting portion 138.

In this regard, the mounting portion 138 may allow the inlet 133 and the circulating duct 300 to be in communication with each other, may be formed in a shape of a duct, and may be formed in a shape in which one end is recessed in the inlet 133. Additionally, the mounting portion 138 may be constructed to allow air discharged from the drum 200 to be introduced thereinto, and the introduced air may pass through the mounting portion 138 and flow to the circulating duct 300.

In one example, the second support 140 may include a second fixed body 141 fixed inside the cabinet 100, and a second support body 145 that is disposed on the second fixed body 141 and is inserted into the rear surface of the drum body 210. The second support 140 has an air inlet 148 that extends through the second fixed body 141 and allows the interior of the drum body 210 and the interior of the cabinet 100 to be in communication with each other. In this case, the circulating duct 300 may connect the mounting portion 138 with the air inlet 148.

In addition, the first support 130 may have a first roller 139 that rotatably supports a circumferential surface of the drum body 210, and the second support 140 may have a second roller 149 that rotatably supports the circumferential surface of the drum body.

In one example, the drum body 210 may be rotated by a rotational force transmitted from the driver 280. The driver 280 may include a motor 230 fixed inside the cabinet 100, a pulley 250 rotated by the motor, and a belt 270 that connects a circumferential surface of the pulley 250 with the circumferential surface of the drum body 210.

The circulating duct 300 may include an exhaust duct 310 connected to the mounting portion 138, a supply duct 330 connected to the air inlet 148, and a connecting duct 350 that connects the exhaust duct with the supply duct.

The heat exchanger assembly 400 may be formed as various apparatuses as long as it may sequentially dehumidify and heat air introduced into the circulating duct 300. For example, heat exchanger assembly 400 may be formed as a heat pump system.

In one example, the heat exchanger assembly 400 may include a fan 490 that flows air along the circulating duct 300, a first heat exchanger (an evaporator) 410 that removes moisture from air introduced into the circulating duct 300, and a second heat exchanger (a condenser) 430 that is disposed inside the circulating duct 300 to heat air that has passed through the first heat exchanger 410.

In this regard, the fan 490 may include an impeller 491 disposed inside the circulating duct 300 and an impeller motor 493 that rotates the impeller 491. The impeller 491 may be disposed in any of the exhaust duct 310, the connecting duct 350, and the supply duct 330. In the present disclosure, a case in which the impeller 491 is disposed in the supply duct 330 will be described as an example.

In one example, the first heat exchanger 410 may be composed of multiple metal plates arranged along a width direction of the connecting duct 350 or a height direction of the connecting duct, and the second heat exchanger 430 may be composed of multiple metal plates arranged along the width direction of the connecting duct or the height direction of the connecting duct. The first heat exchanger 410 and the second heat exchanger 430 are sequentially arranged in a direction from the exhaust duct 310 to the supply duct 330 inside the connecting duct 350, and are connected to each other via a refrigerant pipe 480 that forms a circulation flow channel of a refrigerant.

In this regard, the refrigerant flows along the refrigerant pipe 480 by a compressor 450 located outside the circulating duct 300, and a pressure regulator 470 that adjusts a pressure of the refrigerant that has passed through the second heat exchanger 430 is disposed inside the refrigerant pipe 480.

In one example, the first heat exchanger 410 is a means of cooling air and evaporating the refrigerant by transferring heat of air introduced into the exhaust duct 310 to the refrigerant. The second heat exchanger 430 is a means of heating air and condensing the refrigerant by transferring heat of the refrigerant that has passed through the compressor 450 to air. In this case, when moisture contained in air passes through the first heat exchanger 410, it will collect on a bottom surface of the connecting duct 350 along a surface of the first heat exchanger 410. In this regard, to collect water removed from air passing through the first heat exchanger 410, a water collector 360 is disposed at a lower portion of the circulating duct 300.

In one example, water collected in the water collector 360 may be collected in a reservoir 600 and discharged all at once at a later time. The reservoir 600 may include a storage body 620 that is detachably disposed in the cabinet 100 and provides a space for storing water, and a water inlet 622 that extends through the storage body 620 to allow water discharged from a reservoir supply pipe 510 to flow into the storage body 620.

Additionally, the storage body 620 may be formed as a drawer-type tank that is extended from the cabinet 100. In this case, the front panel 110 of the cabinet should have a reservoir mounting hole into which the storage body 620 is inserted. A panel 610 is fixed to a front surface of the storage body 620. The panel 610 may form a portion of the front panel 110 by being detachably coupled to the reservoir mounting hole 138a.

In one example, the panel 610 may further have a groove 611 into which a user's hand is inserted. In this case, the panel 610 will also function as a handle for withdrawing the storage body 620 from or inserting the storage body 620 into the cabinet 100.

In this regard, the water inlet 622 may receive water discharged from a nozzle 623 fixed to the cabinet 100. The nozzle 623 may be fixed to the upper panel 125 of the cabinet so as to b e located above the water inlet 622 when the storage body 620 is inserted into the cabinet 100.

In one example, to minimize foreign substances (hereinafter, referred to as 'lint') emitted from the drum body 210 from being deposited in the first heat exchanger 410 and the second heat exchanger 430, the filter 700 that filters the lint in air may be additionally disposed.

The filter 700, as a means for filtering air flowing from the drum body 210 to the exhaust duct 310, may be detachably inserted into the exhaust duct 310 via the mounting portion 138.

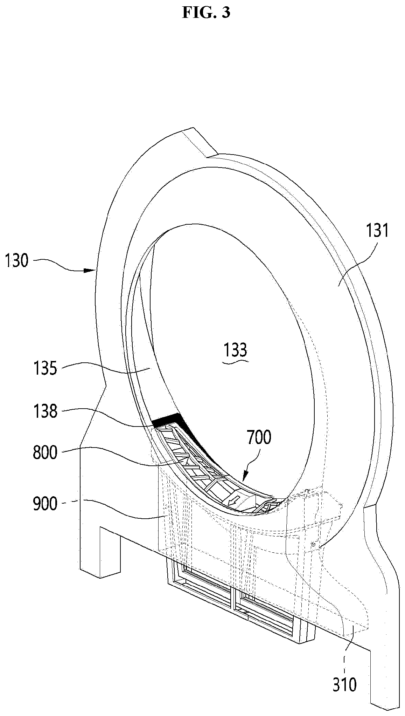

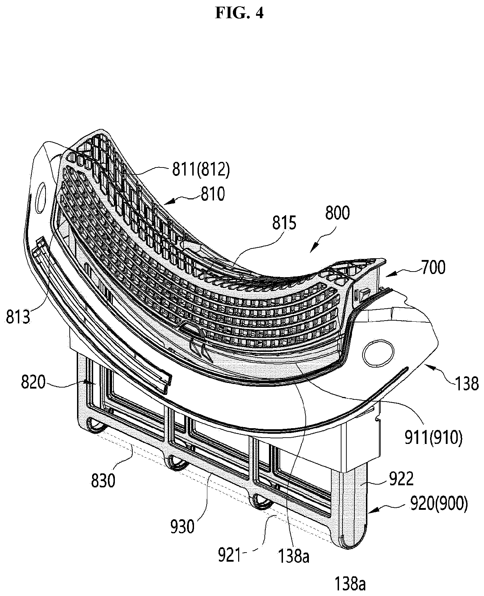

Hereinafter, a mounted state of the filter will be described in detail with reference to the attached FIGS. 3 and 4.

FIG. 3 is a perspective view showing a mounted state of a filter according to the present disclosure, FIG. 4 is a perspective view showing a filter according to the present disclosure.

The filter 700 is insertable into the mounting portion 138 formed at a lower portion of the connecting body 137 of the first support 130. In this regard, the mounting portion 138 may be constructed to extend through the connecting body 137 and be in communication with the circulating duct 300.

In one example, the mounting portion 138 may be constructed to allow the inlet 133 and the circulating duct 300 to be in communication with each other to provide a flow channel through which air discharged from the drum 200 first passes. The mounting portion 138 may be formed in a duct shape in the first support 130, and may provide the space in which the filter 700 is accommodated and mounted.

In one example, the filter 700 may be mounted in the mounting portion 138 to allow air to pass therethrough, but to filter the lint and the foreign substances contained in air. In this regard, the filter 700 may include an internal filter 800 that is mounted in the mounting portion 138 and filters the foreign substances from air discharged from the drum 200.

In this regard, the internal filter 800 may be mounted in the mounting portion 138 to form an inner circumferential surface of the inlet 133, and may be formed so as not to protrude from the inner circumferential surface of the inlet 133 inwardly of the inlet 133. Additionally, the internal filter 800 may be formed with an area size or a shape corresponding to those of an inlet of the mounting portion 138. As a result, a gap between the internal filter 800 and the mounting portion 138 may be minimized to prevent the foreign substances or a portion of the laundry from being input to the gap between the internal filter 800 and the mounting portion 138.

In one example, the filter 700 may further include an external filter 900 that is mounted in the mounting portion 138 under the internal filter 800 and filters the foreign substances. The external filter 900 may be disposed downstream of the internal filter 800 on a flow channel to additionally filter the lint and the foreign substances that the internal filter 800 was not able to filter.

Therefore, the filter 700 may more reliably remove the foreign substances such as the lint from air discharged from the drum 200. When the external filter 900 is mounted in the mounting portion 138, it may not be exposed to the inlet 133.

In one example, the filter 700 may be prevented from deviating to the circulating duct 300 by being supported in the mounting portion 138. In this regard, at least a portion of the internal filter 800 may be accommodated in the external filter 900.

Therefore, a space occupied by the internal filter 800 and the external filter 900 may be reduced as much as possible to minimize a volume of the filter 700. Additionally, the user may be induced to withdraw the internal filter 800 and the external filter 900 as one piece or mount them in the mounting portion 138 at the same time.

In one example, the external filter 900 may include a seating body 910 mounted in the mounting portion 138, and an inserted body 920 that extends downward from the seating body 910, is at least partially inserted into the mounting portion 138, and at the same time, accommodates an accommodated body 820 of the internal filter 800 therein.

In this regard, the seating body 910 may include an open surface at the top through which air and the foreign substances may be introduced, and may include a seating base 911 that may be seated and supported at the top of the mounting portion 138. Additionally, the inserted body 920 may extend downward from an inner circumferential surface of the seating base 911 and be inserted into the mounting portion 138.

In one example, the inserted body 920 may be formed in a casing shape that provides a space for the foreign substances to accumulate therein. In addition, the inserted body 920 may have a through-hole in most of an area thereof, and may have a mesh 921 that is coupled to the through-hole and is able to filter the foreign substances. The mesh 921 may be formed with a mesh member or the like, such that air may pass therethrough but the foreign substances may be filtered.

In one example, the inserted body 920 may include a first inserted body 922 that extends from a lower portion of the seating body 910 and filters the foreign substances, and a second inserted body 923 that is pivotably disposed under the first inserted body 922 and defines an insertion space into which the internal filter 800 is inserted together with the first inserted body 922.

In one example, the external filter 900 may further include a rigid portion 930 that reinforces rigidity of the first inserted body 922 and the second inserted body 923 and maintains shapes of the first inserted body 922 and the second inserted body 923 when they are inserted into the mounting portion 138. The rigid portion 930 may be formed in a shape of a rib extending in a width direction of the seating body 910, and may further serve as a hinge such that the first inserted body 922 and the second inserted body 923 may pivot.

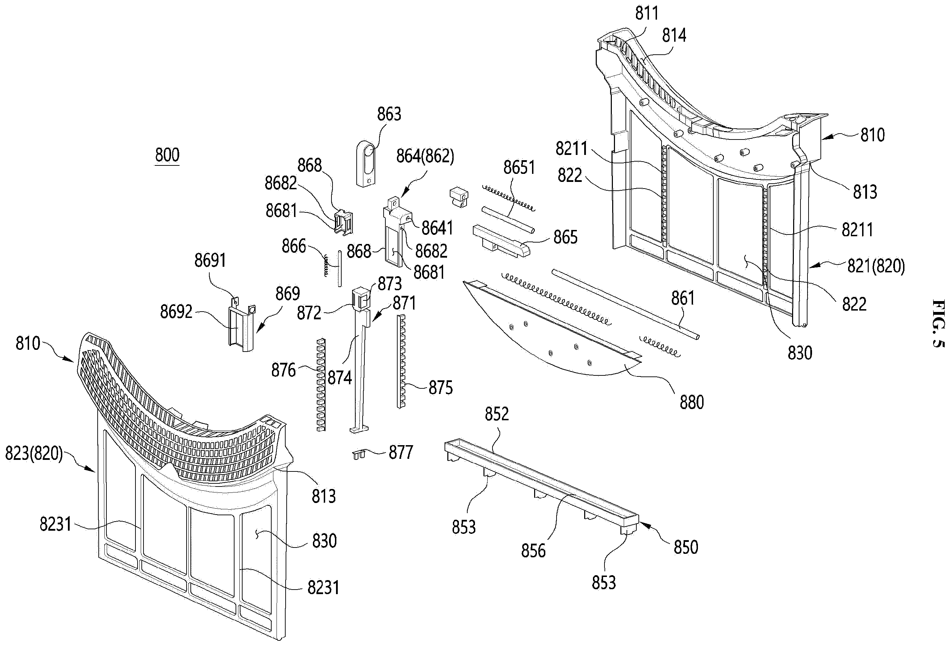

Hereinafter, the inner filter 800 according to one embodiment of the present disclosure will be described in detail with reference to FIGS. 5 to 7.

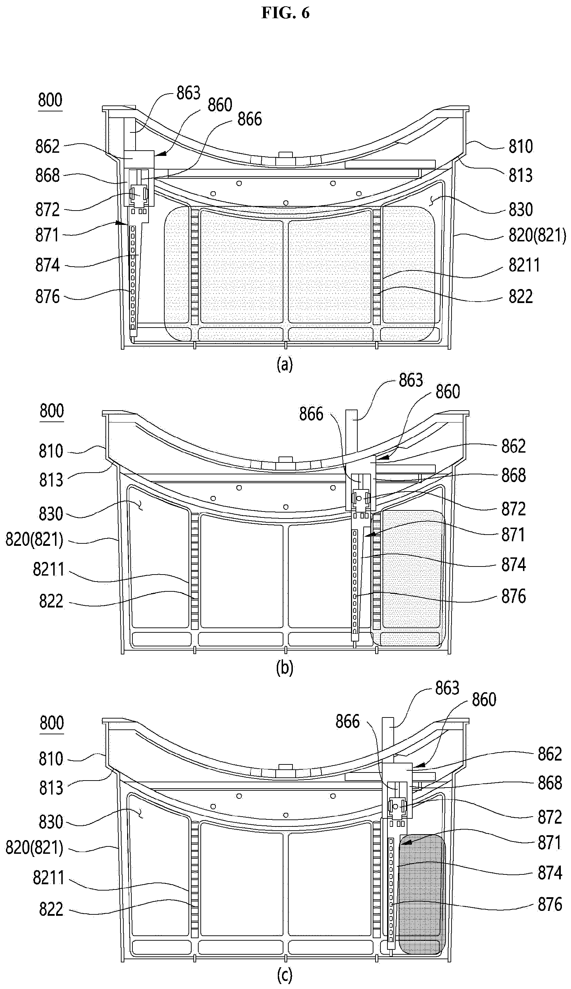

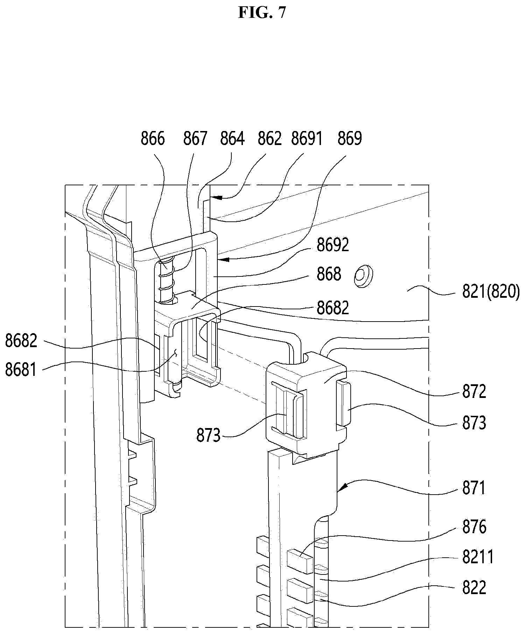

FIG. 5 is an exploded view illustrating an inner filter according to one embodiment of the present disclosure, FIG. 6 is an exploded view illustrating engagement of a brush part according to one embodiment of the present disclosure, and FIG. 7 is a view illustrating the operation of the inner filter according to one embodiment of the present disclosure.

As shown in the figures, the inner filter 800 according to one embodiment of the present disclosure may include a support body 810 seated on and supported by the mounting portion 138 and an accommodation body 820 extending downward from the support body 810 and at least partially accommodated in the outer filter 900. The support body 810 may correspond to the shape and area of the mounting hole 138a, and may define a portion of the inlet 133.

Further, the support body 810 may include an open surface 812 provided on the top to allow air and foreign substances to enter, and multiple blocking ribs 811 configured to shield at least a portion of the open surface 812. The blocking ribs 811 may block bulky materials, such as clothing, in addition to small-sized foreign substances, such as air or lint, from being introduced into the open surface 812. The blocking ribs 811 may be provided on the open surface 812 in the form of a mesh.

The top surface of the support body 810 may include a coupling portion 815 that couples the support body 810 to the mounting portion 138, or guides the installation and withdrawal of the inner filter 800. The area of the support body 810 may be larger than the area of the accommodation body 820.

Further, the support body 810 may include a seating surface 813 provided at a lower portion thereof to extend outward from a top surface of the accommodation body 820. The seating surface 813 may be supported on the mounting hole 138a to prevent the inner filter 800 from falling into the mounting hole 138a.

The accommodation body 820 may be box-shaped and extend from a lower portion of the support body 810 to provide a space for foreign substances to accumulate inside. The accommodation body 820 may be provided with through-holes occupying most of the area thereof, and may have a mesh portion 830 coupled to the through-holes and capable of filtering foreign substances on the surface thereof.

Here, the mesh portion 830 may be configured as a mesh that occupies the through-holes formed in the accommodation body 820. The mesh portion 830 may be configured to occupy a majority of the surface area of the accommodation body 820. Due to the mesh portion 830, the accommodation body 820 may have the shape of a frame supporting the mesh portion 830.

The accommodation body 820 may include a first accommodation body 821 extending from a lower portion of the support body 810 to filter out foreign substances, and a second accommodation body 823 rotatably arranged under the first accommodation body 821 to define, together with the first accommodation body 821, a space for accumulation of foreign substances.

In other words, the first accommodation body 821 and the second accommodation body 823 may be arranged separated from each other such that the accommodation body 820 has an open interior. Thus, foreign substances filtered through the first accommodation body 821 and the second accommodation body 823 and accumulated in the accommodation body 820 may be removed by a user.

Here, the first accommodation body 821 and the second accommodation body 823 may each have at least one reinforcing rib 8211, 8231 that extends in a vertical direction to reinforce the first accommodation body 821 and the second accommodation body 823. Thus, the mesh portion 830 may be positioned in the space defined by the reinforcing ribs 8211, 8231 arranged inside the first accommodation body 821 and the second accommodation body 823 and extending in the vertical direction.

Each of the reinforcing ribs 8211 and 8231 of the first accommodation body 821 and the second accommodation body 823 is provided with multiple lint protrusions 822 arranged to catch, by a brush part 871 of a compressing part 860 to be described later, the lint filtered by the mesh portions of the first accommodation body 821 and the second accommodation body 823.

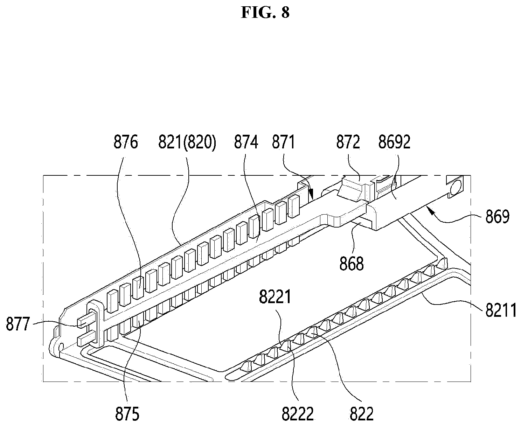

Here, the lint protrusions 822 may be arranged spaced apart at regular intervals in the longitudinal direction of each reinforcing rib 8211, 8231, as shown in FIG. 8. Further, the lint protrusion 822 may include an inclined surface 8221 extending outwardly upward with respect to the center of the inner filter 800, and a catch surface 8222 formed on the side facing the outside of the inner filter 800 and arranged relatively perpendicular to the reinforcing rib 8211, 8231.

The lint protrusions 822 formed on the reinforcing ribs 8211 and 8231 may cause the lint moved by first brushes 875 and second brushes 876 of the brush part 871 to be moved over the inclined surfaces 8221 to the outer side of the inner filter 800 when the brush part 871 is moved in the outward direction of the inner filter 800, When the brush part 871 is moved toward the center of the inner filter 800, it may be caught on the catch surfaces 8222 of the lint protrusions 822 to capture lint on both sides of the inner filter.

Here, the lint protrusions 822 are spaced apart at regular intervals along the reinforcing ribs 8211 and 8231, and the first brushes 875 and second brushes 876 of the brush part 871 may be disposed to correspond to the spacing defined by the lint protrusions 822. The first brushes 875 and second brushes 876 of the brush part 871 will be described in more detail when the brush part 871 is described.

Just as the accommodation body 820, the support body 810 may be separable. The support body 810 may include a portion to which the first accommodation body 821 is coupled and a portion to which the second accommodation body 823 is coupled. The portions are detachable from each other.

The inner filter 800 may further include a connector 840 connecting the first accommodation body 821 and the second accommodation body 823. The connector 840 may be formed in the shape of a rib extending widthwise from lower portions of the first accommodation body 821 and the second accommodation body 823. The connector 840 may also serve as a hinge around which the first accommodation body 821 and the second accommodation body 823 pivot.

The filtering space defined by the first accommodation body 821 and the second accommodation body 823 may be further provided with a compressing part 860 arranged to compress the lint filtered in the filtering space against both sides of the filtering space and move the line while moving in the filtering space.

A movement groove 814 may be formed on one side of the support body 810 to allow the compressing part 860 to move in the longitudinal direction of the support body 810. The compressing part 860 may be movable to both sides in the longitudinal direction of the filtering space by moving along the movement groove 814.

Here, the movement groove 814 extends along the open surface 812 of the inner filter 800 in the longitudinal direction of the support body 810, and may be formed in an arc shape corresponding to the shape of the open surface 812. In other words, the filter part 700 may be mounted on the mounting portion 138 formed on the inlet 133 of the first support 130, and the open surface 812 of the inner filter 800 may be formed in an arc shape extending along the shape of the inlet 133.

The compressing part 860 includes a movement shaft 861 disposed on an inner side of the support body in the longitudinal direction of the support body, and a movable part 862 slidably engaged with the movement shaft 861 and partially exposed to the movement groove formed in the support body, a brush part 871 detachably coupled to the movable part 862 and extending downward into the filtering space to scrape lint captured by the mesh portions of the first accommodation body 821 and the second accommodation body 823.

The movement shaft 861 is fixed along the longitudinal direction of the support body 810 on the inner side of the open surface 812 formed in the support body 810.

The movable part 862 is arranged to move along the movement shaft 861 on the inner surface of the support body 810. The movable part 862 includes a movement guide 864 coupled to the movement shaft 861 to move in a direction along the movement shaft 861, and a movement knob 863 connected to an upper side of the movement guide 864 and extending through the movement groove 814 of the support body 810 to an upper side of the open surface 812, a lifting guide 868 liftably connected to a lower portion of the movement guide 864, and a fixing guide 869 fastned to the movement guide 864 to prevent separation of the lifting guide 868.

Here, the movement guide 864 is provided with a through-hole 8641 through which the movement shaft 861 extends, and is arranged to slide along the movement shaft 861 inserted into the through-hole 8641 in the direction of the extension of the movement shaft 861.

The movement guide 864 may further be provided with a horizontal guide 865 arranged to prevent the movement guide 864 from moving along an axis different from the direction of the extension of the movement shaft 861 when the movement guide 864 is moved along the movement shaft 861.

The horizontal guide 865 may have a bar shape of a predetermined length, and may be fastened to the movement guide 864 in a direction parallel to the extension direction of the movement shaft 861. The horizontal guide 865 may be fastened to the movement guide 864 with the bottom surface of the horizontal guide 865 brought into contact with the top surface of the movement shaft 861.

Thus, when the movement guide 864 is slidably moved along the movement shaft, it may be moved while the bottom surface of the horizontal guide 865 fastened to the movement guide 864 remains in contact with the top surface of the movement shaft. Accordingly, the movement guide 864 may be stably moved along the extension direction of the movement shaft.

Further, the movement guide 864 and the horizontal guide 865 may be coupled by a separate auxiliary shaft 8651 such that the horizontal guide 865 may be moved with respect to the movement guide 864 in the direction of movement of the movement guide 864. In this case, the movement guide 864 and the horizontal guide 865 may further include an auxiliary spring 8652 arranged between the movement guide 864 and the horizontal guide 865 to exert a tensile force.

Thus, the movement guide 864 and the horizontal guide 865 are kept spaced apart by the auxiliary spring 8652 with a predetermined elastic force. As the movement guide 864 is moved to one side of the inner filter, the auxiliary spring 8652 provided on the horizontal guide 865 supports the movement guide 864 with the predetermined elastic force.

Here, when the movement guide 864 is moved further to one side of the inner filter with a force greater than the elastic force of the auxiliary spring 8652, the movement guide 864 may be moved further to one side of the inner filter, overcoming the elastic force of the auxiliary spring 8652.

The lifting guide 868 may be arranged under the movement guide 864 to be slidably lifted with respect to the movement guide 864. Thus, a lifting space allowing the lifting guide 868 to be lifted therein may be formed under the movement guide 864.

Here, a fastening part 872 of the brush part 871, which will be described later, may be fastened to the lifting guide 868. The lifting guide 868 has a fastening space in which the fastening part 872 may be mounted, and the fastening space has engagement grooves 8682. The engagement grooves 8682 are formed on opposite sides of the lifting guide 868 to face in opposite directions, and engagement protrusions 873 of the fastening part, which will be described later, are mounted therein, respectively.

A lift shaft 866 that guides up-down movement of the lifting guide 868 may be further provided between the lifting guide 868 and the traveling guide 864. The lift shaft 866 is fixed to the ceiling surface of the lifting space formed in the movement guide 864, and the lifting guide 868 is arranged such that the lift shaft 866 extends therethrough.

Here, the lift shaft 866 may further include a tension spring 867 arranged between the movement guide 864 and the lifting guide 868 to exert a tensile force. The tension spring 867 may exert elastic force on the lifting guide 868 downward with respect to the movement guide 864.

As such, since the lifting guide 868 is elastically supported in a downward direction with respect to the movement guide 864, the brush part 871 fastened to the lifting guide 868 may also be elastically supported in a downward direction of the movement guide 864, just like the lifting guide 868. Thus, the brush part 871 may always be elastically supported in the downward direction of the inner filter 800 all the way to the bottom of the filtering space of the inner filter 800.

The movement guide 864 may further include a fixing guide 869 arranged to prevent the brush part 871 fastened to the lifting guide 868 from being separated. The fixing guide 869 may be hingedly coupled to an upper end of the movement guide 864 such that the lower portion thereof is pivoted in a direction to press against the fastening part 872 of the brush part 871 to prevent separation of the brush part 871.

The brush part 871 may include the fastening part 872 inserted into and fastened to the lifting guide 868, a brush body 874 extending from a lower end of the fastening part 872 into the filtering space of the inner filter 800, and multiple brushes 875, 876, and 877 provided on the brush body 874.

Here, the fastening part 872 may be formed in a shape corresponding to the fastening space 8681 of the lifting guide 868, and may include a pair of engagement protrusions 873 provided on both sides thereof to be inserted into the engagement grooves 8682 of the lifting guide 868. Here, the engagement protrusions 873 may be formed in the shape of elastic segments to have a predetermined elastic force outwardly of the fastening part 872. As the fastening part 872 is inserted into the lifting guide 868, the engagement protrusions may be inserted into the snag grooves 8682 so as not to be separated.

As an external force is applied, the engagement protrusions 873 of the fastening part 872 may be displaced from the engagement grooves 8682, and the fastening part 872 may be separated from the lifting guide 868. In other words, the brushes 875, 876, and 877 included in the brush body 871 may be worn/aged during prolonged use. The brushes 875, 876, and 877 may be replaced after a certain period of use.

The brush body 874 extends from the lower end of the fastening part 872 into the filtering space defined by the first accommodation body 821 and the second accommodation body 823 of the inner filter 800. The brush body 874 may have one surface facing the mesh portion of the first accommodation body 821 and an opposite surface facing the mesh portion of the second accommodation body 823. The one surface and opposite surface may be provided with first brushes 875 and second brushes 876 that contact the mesh portion of the first accommodation body 821 and the mesh portion of the second accommodation body 823, respectively.

The first brushes 875 and second brushes 876 of the brush body 874 described above may be integrally formed by insert injection in manufacturing the brush body 874. Alternatively, they may be separately and detachably attached to the brush body 874.

The brush part 871 of the inner filter 800 according to one embodiment of the present disclosure described above is shown in FIG. 8.

FIG. 8 is an enlarged perspective view illustrating a portion of a brush frame and accommodation body according to one embodiment of the present disclosure.

As shown in FIG. 8, the first brushes 875 and the second brushes 876 may extend from the brush body 874 toward the inner side surfaces of the first accommodation body 821 and the second accommodation body 823. As the compressing part 860 moves, the first brushes 875 and the second brushes 876 may move the lint filtered on the surface of the mesh portion 830 of the first accommodation body 821 and the second accommodation body 823 to the outer side of the inner filter.

As the compressing part 860 is moved to the outer side of the inner filter 800, the lint moved by the first brushes 875 and the second brushes 876 is moved to the outer side of the inner filter 800 beyond the inclined surfaces 8221 of the lint protrusions 822 formed on the reinforcing ribs of the first accommodation body 821 and the second accommodation body 823.

Here, the inclined surfaces 8221 of the lint protrusions 822 formed on the reinforcing ribs 8211 and 8231 are inclined such that the height thereof increases as they extend toward the outer side of the inner filter. The lint moved by the first brushes 875 or the second brushes 876 is loaded on the outer side beyond the inclined surfaces 8221 in the inner filter 800.

Further, when the compressing part 860 moved to the outer side of the inner filter 800 is moved to the center of the inner filter 800, the lint moved to the outer side of the inner filter 800 may be moved back to the center of the inner filter 800 by the movement of the first brushes 875 and the second brushes 876.

The lint protrusions 822 formed on the reinforcing ribs 8211 and 8231 have catch surfaces 8222 that are formed on the side facing away from the inclined surfaces 8221 and extend in a direction perpendicular to the reinforcing ribs 8211 and 8231. When the compressing part 860 is moved to the center of the inner filter 800, the lint moved by the first brushes 875 and the second brushes 876 is caught on the catch surfaces 8222 and retained on the outer side of the inner filter 800.

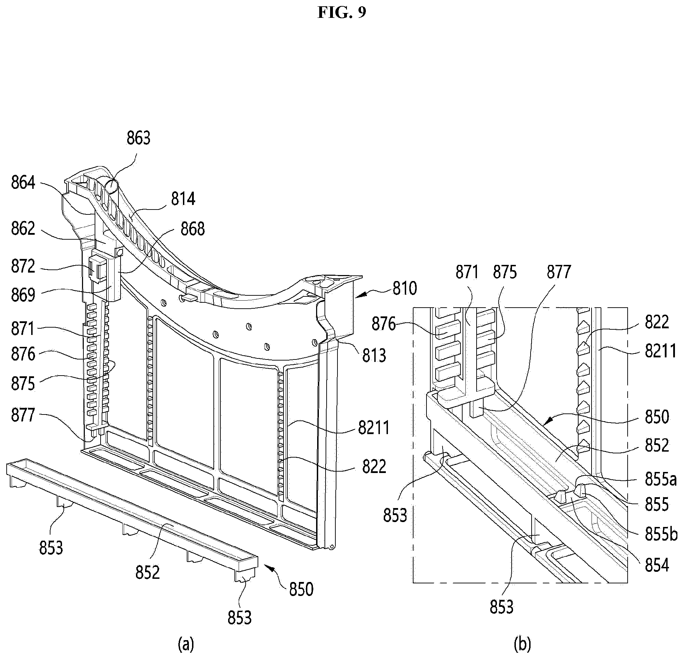

The inner filter according to one embodiment of the present disclosure may further include a separate auxiliary filter 850 mounted in an inner lower portion thereof. Hereinafter, the mounting of the auxiliary filter 850 will be described in detail with reference to FIG. 9.

FIG. 9 is a perspective view illustrating the mounting of a auxiliary filter according to one embodiment of the present disclosure.

As shown in FIG. 9, the lower portion of the inner filter may be provided with an additional, separate auxiliary filter 850 at a location where the first accommodation body 821 and the second accommodation body 823 abut. The auxiliary filter 850 may have a mesh portion of a different size than the mesh portions formed in the first accommodation body 821 and the second accommodation body 823.

The auxiliary filter 850 may further include an auxiliary filter frame 852 positioned in a lower space defined by the first accommodation body 821 and the second accommodation body 823 when the first accommodation body 821 and the second accommodation body 823 are coupled to each other, and an auxiliary filter mesh portion 856 positioned in the lower open space of the auxiliary filter frame 852.

Here, the auxiliary filter frame 852 is formed in a rectangular shape with an open top and bottom. The auxiliary filter frame 852 is arranged to be seated between the lower portions of the first accommodation body 821 and the second accommodation body 823.

In addition, multiple reinforcing ribs 854 are provided inside the auxiliary filter frame 852 to maintain the shape of the auxiliary filter frame 852, and multiple support ribs 853 may be provided at the bottom of the auxiliary filter frame 852 to support the auxiliary filter 850 such that the auxiliary filter 850 seated between the lower portions of the first accommodation body 821 and the second accommodation body 823 may be spaced apart from the first accommodation body 821 and the second accommodation body 823 by a predetermined distance. Here, the support ribs 853 may extend from the bottom portions of the reinforcing ribs 854 toward the bottom portions of the first accommodation body 821 and the second accommodation body 823.

In addition, the reinforcing rib 854 may be provided with lower lint protrusions 855 that perform the same function as the lint protrusions 855 described above. The lower lint protrusions 855 may extend from the top of the reinforcing rib 854 to the inside of the first accommodation body 821 and the second accommodation body 823, and may extend to the lower portion of the brush body 874 of the brush part 871 described above.

Here, the lower lint protrusions 855 may be spaced apart from each other by a predetermined distance in the longitudinal direction of each reinforcing rib 854 of the auxiliary filter frame 852, as shown in FIG. 9. Further, the lower lint protrusion 855 may be provided with an inclined surface 855a, which rises upward toward the outside with respect to the center of the auxiliary filter 850, and also provided with a catch surface 855b arranged relatively perpendicular to the reinforcing rib 854 on the side facing the outer side of the auxiliary filter 850.

In addition, when the auxiliary filter 850 is provided, the brush part 871 may further include third brushes 877 for cleaning of lint that is filtered by the auxiliary filter 850. The third brush 877 may extend from the bottom of the brush body 874 of the brush part to the inside of the auxiliary filter frame 852.

The third brushes 877 may be integrally formed at the lower end of the brush body 874 of the brush part 871 by insert injection during the manufacture of the brush body 874. Alternatively, it may be detachably attached to the lower end of the brush body 874.

Here, the lower lint protrusions 855 are spaced apart by a predetermined distance from each other along the reinforcing ribs 854, and the third brushes 877 of the brush part 871 may be disposed to correspond to the distance between the lower lint protrusions 855.

Accordingly, when the brush part 871 is moved to the outer side of the inner filter 800, the lower lint protrusions 855 formed on the reinforcing ribs 854 of the auxiliary filter frame 852 may cause lint moved by the third brushes 877 of the brush part 871 to move over the inclined surfaces 855a of the lower lint protrusions 855 to the outer side of the auxiliary filter 850. When the brush part 871 is moved toward the center of the auxiliary filter 850, it may be caught on the catch surfaces 855b of the lint protrusions 855, and thus lint may be captured on both sides of the auxiliary filter 850.

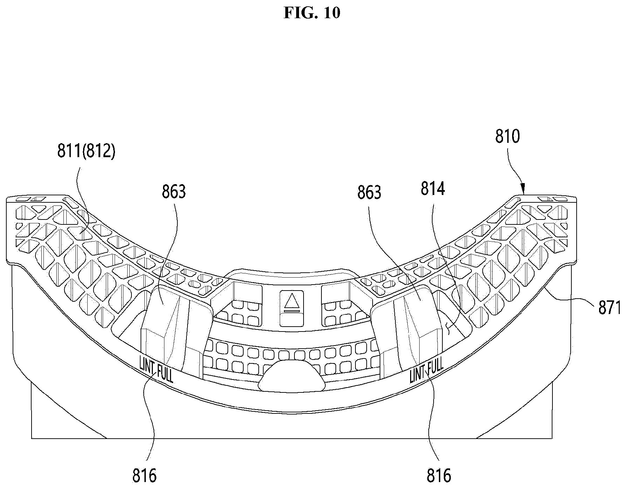

The inner filter according to one embodiment of the present disclosure may further include a lint accumulation indicator 816 disposed on the support body 810 to indicate the amount of lint compressed in the filtering space by the compressing part. Hereinafter, the lint accumulation indicator 816 will be described in detail with reference to FIG. 10.

FIG. 10 is a perspective view illustrating a lint accumulation indicator of the inner filter according to one embodiment of the present disclosure.

As the movement part 862 reciprocates inside the first and second accommodation bodies 821 and 823 of the inner filter 800 along the movement shaft 861, the lint moved by the brush part 871 of the compressing part 860 is accumulated on both sides in the first and second accommodation bodies 821 and 823.

Accordingly, to enable a user to check the amount of lint accumulated in the inner filter 800, accumulation indicators 816 configured to indicate the amount of accumulated lint may be provided on both adjacent sides of the movement groove 814 formed in the support body 810 of the inner filter 800.

Specifically, on one surface of the support body 810 in which the movement groove 814 is formed, the accumulation indicators 816 may be disposed on both sides along the direction in which the movable part 862 of the compressing part 860 is moved to limit the travel distance of the movable part.

As described above, lint is accumulated on both sides in the first and second accommodation bodies 821 and 823 by the compressing part 860 in the inner filter 800. When the amount of lint accumulated on both sides in the first and second accommodation bodies 821 and 823 is greater than or equal to a specific amount, the brush part 871 of the compressing part is no longer moved due to the accumulated lint. Accordingly, the support body of the inner filter 800 may be further provided with an accumulation indicator 816 at a position corresponding to the amount of lint accumulated in the inner filter 800.

Here, the locations of the lint indicators portion 816 may vary depending on the internal volume, accumulation space, and the like of the inner filter 800. However, they may be formed at intervals shorter than the reciprocating travel distance of the movement knob 863 moved along the movement groove 814 of the support body 810.

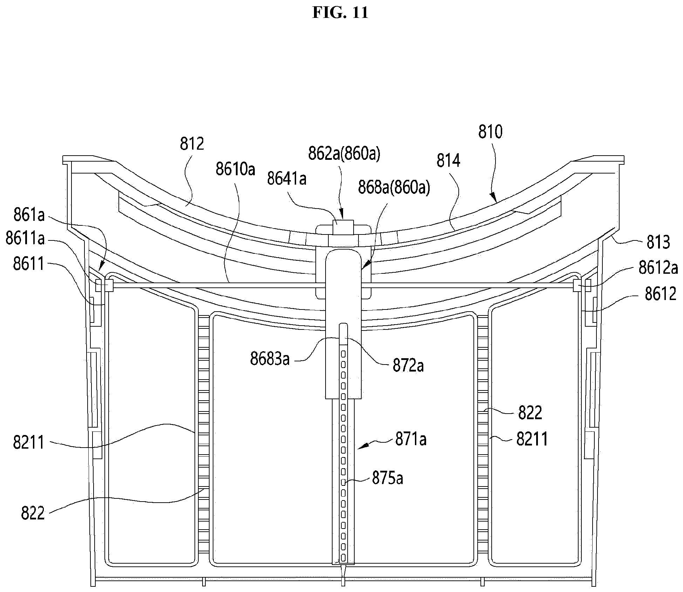

Hereinafter, an inner filter according to another embodiment of the present disclosure will be described in detail with reference to FIGS. 11 to 13.

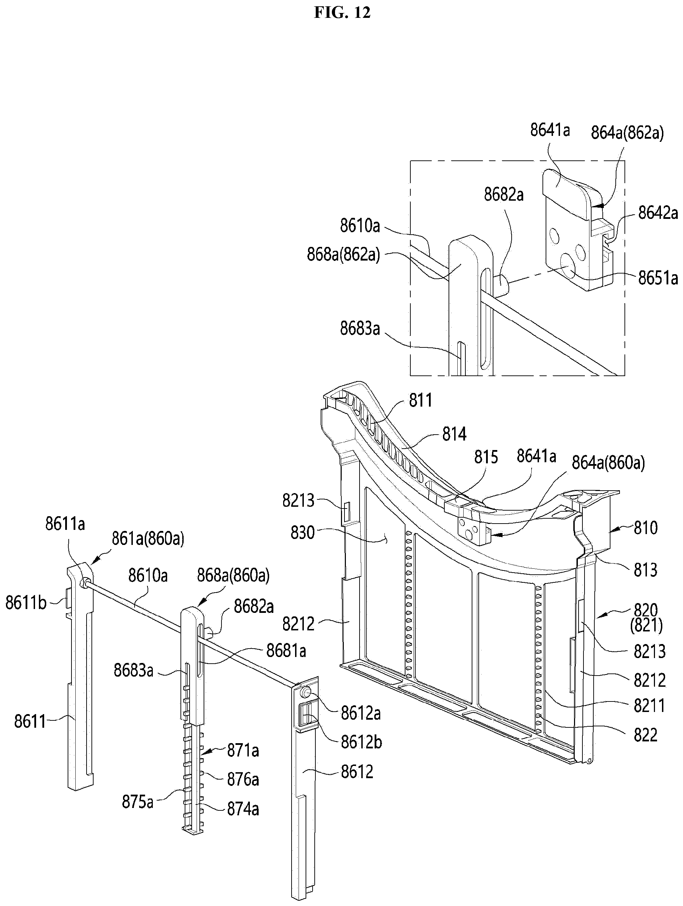

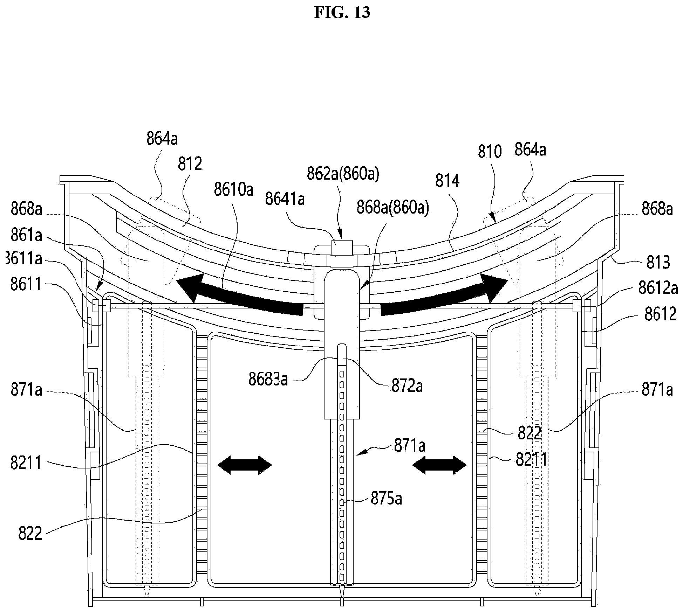

FIG. 11 is a schematic view illustrating the structure of an inner filter according to another embodiment of the present disclosure, FIG. 12 is an exploded perspective view illustrating the inner filter according to this embodiment of the present disclosure, and FIG. 13 is a view illustrating the operation of the inner filter according to this embodiment of the present disclosure.

As shown in the figures, the inner filter 800 according to another embodiment of the present disclosure may include a support body 810 seated on and supported by the mounting portion 138 and an accommodation body 820 extending downward from the support body 810 and at least partially accommodated in the outer filter 900. The support body 810 may correspond to the shape and area of the mounting hole 138a, and may define a portion of the inlet 133.

Further, the support body 810 may include an open surface 812 provided on the top to allow air and foreign substances to enter, and multiple blocking ribs 811 configured to shield at least a portion of the open surface 812. The blocking ribs 811 may block bulky materials, such as clothing, in addition to small-sized foreign substances, such as air or lint, from being introduced into the open surface 812. The blocking ribs 811 may be provided on the open surface 812 in the form of a mesh.

The top surface of the support body 810 may include a coupling portion 815 that couples the support body 810 to the mounting portion 138, or guides the installation and withdrawal of the inner filter 800. The area of the support body 810 may be larger than the area of the accommodation body 820.

Further, the support body 810 may include a seating surface 813 provided at a lower portion thereof to extend outward from a top surface of the accommodation body 820. The seating surface 813 may be supported on the mounting hole 138a to prevent the inner filter 800 from falling into the mounting hole 138a.

The accommodation body 820 may be box-shaped and extend from a lower portion of the support body 810 to provide a space for foreign substances to accumulate inside. The accommodation body 820 may be provided with through-holes occupying most of the area thereof, and may have a mesh portion 830 coupled to the through-holes filter foreign substances on the surface thereof.

Here, the mesh portion 830 may be configured as a mesh that occupies the through-holes formed in the accommodation body 820. The mesh portion 830 may be configured to occupy a majority of the surface area of the accommodation body 820. Due to the mesh portion 830, the accommodation body 820 may have the shape of a frame supporting the mesh portion 830.

The accommodation body 820 may include a first accommodation body 821 extending from a lower portion of the support body 810 to filter out foreign substances, and a second accommodation body (not shown) rotatably arranged under the first accommodation body 821 to define, together with the first accommodation body 821, a space for accumulation of foreign substances. The second accommodation body is the same element as in one embodiment of the present disclosure described above, and may be formed in a shape corresponding to the first accommodation body 821. Thus, a detailed description of the second accommodation body will be skipped.

In other words, the first accommodation body 821 and the second accommodation body may be arranged separated from each other such that the accommodation body 820 has an open interior. Thus, foreign substances filtered through the first accommodation body 821 and the second accommodation body and accumulated in the accommodation body 820 may be removed by a user.

Here, the first accommodation body 821 and the second accommodation body may each have at least one reinforcing rib 8211 that extends in a vertical direction to reinforce the first accommodation body 821 and the second accommodation body. Thus, the mesh portion 830 may be positioned in the space defined by the reinforcing ribs 8211 arranged on the inner side of the first accommodation body 821 and the second accommodation body and extending in the vertical direction.

Each of the reinforcing ribs 8211 of the first accommodation body 821 and the second accommodation body is provided with multiple lint protrusions 822 arranged to catch, by a brush part 871a of a compressing part 860a to be described later, the lint filtered by the mesh portions of the first accommodation body 821 and the second accommodation body.

Here, the lint protrusions 822 may be arranged spaced apart at regular intervals in the longitudinal direction of each reinforcing rib 8211, as shown in FIG. 8. Further, the lint protrusion 822 may include an inclined surface extending outwardly upward with respect to the center of the inner filter 800, and a catch surface formed on the side facing the outside of the inner filter 800 and arranged relatively perpendicular to the reinforcing rib 8211.

The inclined surfaces and the catch surfaces formed on the lint protrusions 822 of the reinforcing ribs 8211 of the first accommodation body 821 and the second accommodation body 8211 have the same structure and function as the inclined surfaces 8221 and the catch surfaces 8222 of the lint protrusions 822 formed on the first accommodation body 821 in the one embodiment of the present disclosure. Therefore, a detailed description thereof will be skipped.

The lint protrusions 822 formed on the reinforcing ribs 8211 may cause the lint moved by first brushes 875a and second brushes 876a of the brush part 871a to be moved over the inclined surfaces to the outer side of the inner filter 800 when the brush part 871a is moved in the outward direction of the inner filter 800, When the brush part 871a is moved toward the center of the inner filter 800, it may be caught on the catch surfaces of the lint protrusions 822 to capture lint on both sides of the inner filter.

Here, the lint protrusions 822 are spaced apart at regular intervals along the reinforcing ribs 8211, and the first brushes 875a and second brushes 876a of the brush part 871a may be disposed to correspond to the spacing defined by the lint protrusions 822. The first brushes 875a and second brushes 876a of the brush part 871a will be described in more detail when the brush part 871a is described.

Just as the accommodation body 820, the support body 810 may be separable. The support body 810 may include a portion to which the first accommodation body 821 is coupled and a portion to which the second accommodation body is coupled. The portions are detachable from each other.

The inner filter 800 may further include a connector 840 connecting the first accommodation body 821 and the second accommodation body. The connector 840 may be formed in the shape of a rib extending widthwise from lower portions of the first accommodation body 821 and the second accommodation body. The connector 840 may also serve as a hinge around which the first accommodation body 821 and the second accommodation body pivot.

The filtering space defined by the first accommodation body 821 and the second accommodation body may be further provided with a compressing part 860a arranged to compress the lint filtered in the filtering space against both sides of the filtering space and move the line while moving in the filtering space.

A movement groove 814 may be formed on one side of the support body 810 to allow the compressing part 860a to move in the longitudinal direction of the support body 810. The compressing part 860a may be movable to both sides in the longitudinal direction of the filtering space by moving along the movement groove 814.

Here, the movement groove 814 extends along the open surface 812 of the inner filter 800 in the longitudinal direction of the support body 810, and may be formed in an arc shape corresponding to the shape of the open surface 812. In other words, the filter part 700 may be mounted on the mounting portion 138 formed on the inlet 133 of the first support 130, and the open surface 812 of the inner filter 800 may be formed in an arc shape extending along the shape of the inlet 133.

The compressing part 860a includes a movement shaft assembly 861a disposed on an inner side of the support body in the longitudinal direction of the support body, and a movable part 862a slidably coupled to the movement shaft assembly 861a and partially exposed to the movement groove 814 formed in the support body 810, a brush part 871a detachably coupled to the movable part 862a and extending downward into the filtering space to scrape lint captured by the mesh portions of the first accommodation body 821 and the second accommodation body.

The movement shaft assembly 861a includes a movement shaft 8610a disposed parallel to the longitudinal direction of the support body 810 on an inner side of an open surface formed in the support body 810, a first shaft support 8611 to which one side of the movement shaft 8610a is fixed, the first shaft support being supported on an one inner side of the accommodation body 820, and a second shaft support 8612 to which an opposite side of the movement shaft 8610a is fixed, the second shaft support being supported on an opposite inner side of the accommodation body 820.

Here, the first shaft support 8611 and the second shaft support 8612 are arranged to face in the opposite directions with respect to the movement shaft 8610a. The first shaft support 8611 and the second shaft support 8612 may have symmetrical shapes facing in the opposite directions. Accordingly, the first shaft support 8611 and the second shaft support 8612 will be described together. However, it should be understood that the description is intended to limit the shape and function of the first shaft support 8611 and the second shaft support 8612. The function of supporting the movement shaft 8610a and the structure allowing the supports to be supported inside the accommodation body 820 may be varied as needed.

In one example, the first shaft support 8611 may be formed in the shape of a bar detachably disposed on one side in the accommodation body 820. An upper portion of the first shaft support 8611 may be provided with a shaft insertion portion 8611a into which one end of the movement shaft 8610a is inserted and fixed, and a middle portion of the first shaft support 8611 may be provided with an engagement protrusion 8611b to be fixed to the first accommodation body 821 or the second accommodation body constituting the accommodation body 820.

Here, the first accommodation body 821 or second accommodation body constituting the accommodation body 820 may have an engagement groove 8213 into which the engagement protrusion 8611b of the first shaft support 8611 is detachably inserted. Specifically, the outer rib 8212 of the first accommodation body 821 or the second accommodation body 8212 may be provided with an engagement groove 8213 into which the engagement protrusion 8611b of the first shaft support 8611 is inserted, at a position corresponding to the engagement protrusion 8611b of the first shaft support 8611.

The movable part 862a is arranged to reciprocatingly move on the inner surface of the support body 810 along the movement shaft assembly 861a in the accommodation body 820. The movable part 862a includes a rotation guide 864a arranged to rotate in an arc shape along the shape of the movement groove 814 formed in the support body 810, a lifting guide 868a rotatably coupled to the rotation guide 864a in the accommodation body 820 and arranged to move in a direction parallel to the movement shaft 8610a along the movement shaft 8610a in connection with the rotation of the rotation guide 864a, the lifting guide having the brush part 871a elastically supported on a lower portion thereof in a vertial direction.

Here, the rotation guide 864a includes a rotation knob 8641a formed at an upper end to extend upward beyond the open surface 812 through the movement groove 814 of the support body 810, a guide groove 8642a formed on one side such that a longitudinal side portion of the movement groove 814 of the support body 810 is inserted thereinto to moveably guide rotation of the guide 864a along the movement groove 814, and a rotation shaft groove 8651a formed on an opposite side such that the rotation shaft 8682a of the lifting guide 868a is rotatably inserted thereinto.

As the user holds and moves the rotation knob 8641a, the guide groove 8642a of the rotation guide 864a may be moved in an arc shape along the movement groove 814.

Further, the lifting guide 868a is formed in the shape of a bar having an open bottom and extending in the vertical longitudinal direction to define a lifting space therein to allow the brush part 871a to be moved. Both sides of the upper portion of the lifting guide 868a is provided with the lifting slits 8681a formed in the vertical direction and elevatable with respect to the movement shaft 8610a inserted thereinto. In addition, the brush part 871a is arranged in the open lower part of the lifting guide 868a so as to be inserted into the lifting guide 868a, and brush slits 8683a may be further formed on the front side and the rear side of the lifting guide along which the first and second brushes 875a and 876a of the brush part 871a, which will be described later, may be moved.

As such, when the lifting guide 868a is moved by the user holding the rotation knob 8641a, it may be moved in an arc along the movement groove 814 of the support body 810. In this case, the lifting guide pivotably coupled to the rotation guide 864a may be moved by the movement of the rotation guide 864a while remaining suspended vertically downward regardless of the arcwise movement of the rotation guide 864a.

Additionally, the lifting guide 868a is coupled to the movement shaft 8610a to move along the movement shaft 8610a. The lifting guide 868a may be moved along the movement shaft 8610a in a direction parallel to the movement shaft 8610a in response to rotation of the rotation guide 864a.

Here, the position of the lifting guide 868a pivotably coupled to the rotation guide 864a may vary in a vertical direction in response to the rotation of the rotation guide 864a. When the position of the lifting guide 868a is changed in a vertical direction according to movement of the rotation guide 864a with the movement shaft 8610a inserted into the lifting slits 8681a of the lifting guide 868a, the lifting guide may move up and down with respect to the movement shaft 8610a while moving in the left and right direction along the movement shaft 8610a.

The brush part 871a may be inserted into a lower portion of the lifting guide 868a and may be elastically supported by the lower portion of the lifting guide 868a. In this case, a separate spring (not shown) to elastically support the brush part 871a may be arranged inside the lifting guide 868a, and the brush part 871a may be elastically supported by the spring downward.

Further, the brush part 871a may include an insertion portion (not shown) inserted into and coupled to the lifting guide 868a, a brush body 874a extending from a lower end of the insertion portion into the filtering space of the inner filter 800, and multiple brushes 875a and 876a provided on the brush body 874a.

Here, the insertion portion of the brush part 871a is formed in a shape corresponding to the inner space of the lifting guide 868a to be movabe up and down in the brush part 871a, and the brush body 874a extends from the lower end of the insertion portion into the filtering space defined by the first accommodation body 821 and the second accommodation body of the inner filter 800.

The brush body 874a may have one surface facing the mesh portion of the first accommodation body 821 and an opposite surface facing the mesh portion of the second accommodation body 823. The one surface and opposite surface may be provided with first brushes 875a and second brushes 876a that contact the mesh portion of the first accommodation body 821 and the mesh portion of the second accommodation body 823, respectively.

The first brushes 875a and second brushes 876a of the brush body 874a described above may be integrally formed by insert injection in manufacturing the brush body 874a. Alternatively, they may be separately and detachably attached to the brush body 874a.

The first brushes 875a and the second brushes 876a may extend from the brush body 874a toward the inner side surfaces of the first accommodation body 821 and the second accommodation body. As the compressing part 860a moves, the first brushes 875a and the second brushes 876a may move the lint filtered on the surface of the mesh portion 830 of the first accommodation body 821 and the second accommodation body to the outer side of the inner filter.

As the compressing part 860a is moved to the outer side of the inner filter 800, the lint moved by the first brushes 875a and the second brushes 876a is moved to the outer side of the inner filter 800 beyond the inclined surfaces of the lint protrusions 822 formed on the reinforcing ribs of the first accommodation body 821 and the second accommodation body.

Here, the inclined surfaces of the lint protrusions 822 formed on the reinforcing ribs 8211 are inclined such that the height thereof increases as they extend toward the outer side of the inner filter. The lint moved by the first brushes 875a or the second brushes 876a is loaded on the outer side beyond the inclined surfaces in the inner filter 800.

Further, when the compressing part 860a moved to the outer side of the inner filter 800 is moved to the center of the inner filter 800, the lint moved to the outer side of the inner filter 800 may be moved back to the center of the inner filter 800 by the movement of the first brushes 875a and the second brushes 876a.

The lint protrusions 822 formed on the reinforcing ribs 8211 have catch surfaces that are formed on the side facing away from the inclined surfaces and extend in a direction perpendicular to the reinforcing ribs 8211. When the compressing part 860a is moved to the center of the inner filter 800, the lint moved by the first brushes 875a and the second brushes 876a is caught on the catch surfaces and retained on the outer side of the inner filter 800.

The inner filter according to this embodiment of the present disclosure may further include a separate auxiliary filter (not shown) mounted in an inner lower portion of the inner filter 800, as in one embodiment of the present disclosure. In addition, the lower portion of the brush body 874a may further include a third brush (not shown) for capturing lint from the auxiliary filter. The auxiliary filter and the third brush may have the same configuration and function as the one embodiment of the inner filter described above, and will not be described in detail.

In addition, the inner filter 800 according to this embodiment of the present disclosure may further include a lint accumulation indicator (not shown) disposed on the support body 810 to indicate the amount of lint compressed in the filtering space by the compressing part 860a. The lint accumulation indicator may have the same configuration and function as in the one embodiment of the inner filter 800 described above, and will not be described in detail.

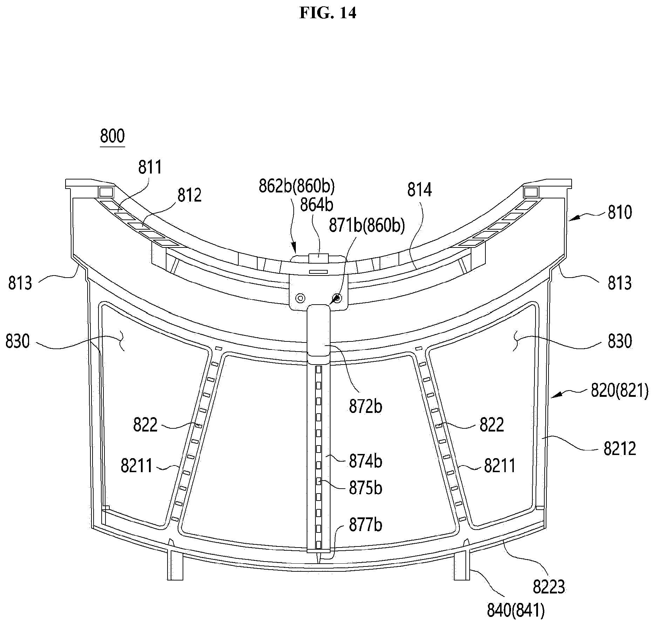

Hereinafter, an inner filter according to another embodiment of the present disclosure will be described in detail with reference to FIGS. 14 to 16.

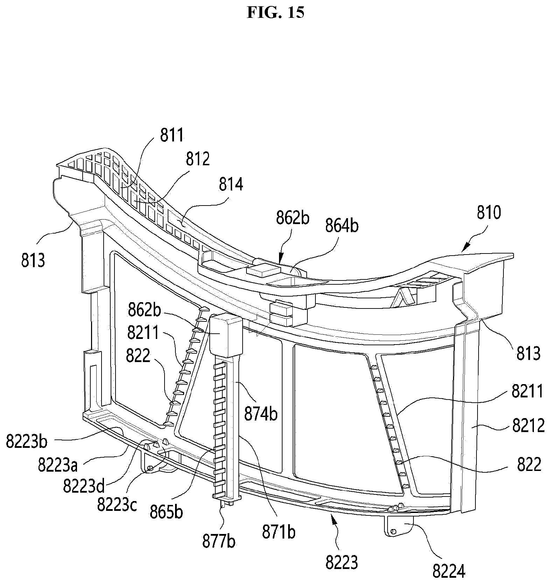

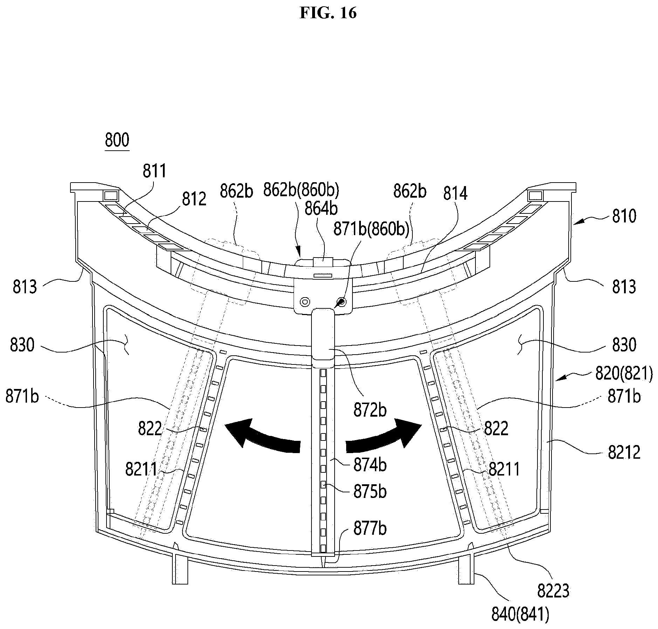

FIG. 14 is a schematic diagram illustrating the structure of an inner filter according to yet another embodiment of the present disclosure, FIG. 15 is an exploded view illustrating the inner filter according to the other embodiment of the present disclosure, and FIG. 16 is a view illustrating the operation of the inner filter according to the other embodiment of the present disclosure..

As shown in FIGS.14 to 16, the inner filter 800 according to this embodiment of the present disclosure may include a support body 810 seated on and supported by the mounting portion 138 and an accommodation body 820 extending downward from the support body 810 and at least partially accommodated in the outer filter 900. The support body 810 may correspond to the shape and area of the mounting hole 138a, and may define a portion of the inlet 133.

Further, the support body 810 may include an open surface 812 provided on the top to allow air and foreign substances to enter, and multiple blocking ribs 811 configured to shield at least a portion of the open surface 812. The blocking ribs 811 may block bulky materials, such as clothing, in addition to small-sized foreign substances, such as air or lint, from being introduced into the open surface 812. The blocking ribs 811 may be provided on the open surface 812 in the form of a mesh.

The top surface of the support body 810 may include a coupling portion 815a that couples the support body 810 to the mounting portion 138, or guides the installation and withdrawal of the inner filter 800. The area of the support body 810 may be larger than the area of the accommodation body 820.

Further, the support body 810 may include a seating surface 813 provided at a lower portion thereof to extend outward from a top surface of the accommodation body 820. The seating surface 813 may be supported on the mounting hole 138a to prevent the inner filter 800 from falling into the mounting hole 138a.

The accommodation body 820 may be box-shaped and extend from a lower portion of the support body 810 to provide a space for foreign substances to accumulate inside. The accommodation body 820 may be provided with through-holes occupying most of the area thereof, and may have a mesh portion 830 coupled to the through-holes filter foreign substances on the surface thereof.

Here, the mesh portion 830 may be configured as a mesh that occupies the through-holes formed in the accommodation body 820. The mesh portion 830 may be configured to occupy a majority of the surface area of the accommodation body 820. Due to the mesh portion 830, the accommodation body 820 may have the shape of a frame supporting the mesh portion 830.

The accommodation body 820 may include a first accommodation body 821 extending from a lower portion of the support body 810 to filter out foreign substances, and a second accommodation body (not shown) rotatably arranged under the first accommodation body 821 to define, together with the first accommodation body 821, a space for accumulation of foreign substances. The second accommodation body is the same element as in one embodiment of the present disclosure described above, and may be formed in a shape corresponding to the first accommodation body. Thus, a detailed description of the second accommodation body will be skipped.

In other words, the first accommodation body 821 and the second accommodation body may be arranged separated from each other such that the accommodation body 820 has an open interior. Thus, foreign substances filtered through the first accommodation body 821 and the second accommodation body and accumulated in the accommodation body 820 may be removed by a user.

Here, the first accommodation body 821 and the second accommodation body may each have at least one reinforcing rib 8211 that extends in a vertical direction to reinforce the first accommodation body 821 and the second accommodation body. Thus, the mesh portion 830 may be positioned in the space defined by the reinforcing ribs 8211 arranged on the inner side of the first accommodation body 821 and the second accommodation body and extending in the vertical direction.

Here, the reinforcing ribs 8211 formed on the first accommodation body 821 and the second accommodation body may be arranged in a radial direction with respect to a center around which the brush part 871b to be described later is rotated. These reinforcing ribs 8211 may be spaced apart in a direction toward the outside of the first accommodation body 821 and the second accommodation body with respect to the center of the accommodation bodies.

Each of the reinforcing ribs 8211 of the first accommodation body 821 and the second accommodation body is provided with multiple lint protrusions 822 arranged to catch, by a brush part 871b of a compressing part 860b to be described later, the lint filtered by the mesh portions of the first accommodation body 821 and the second accommodation body.

Here, the lint protrusions 822 may be arranged spaced apart at regular intervals in the longitudinal direction of each reinforcing rib 8211, as shown in FIG. 8. Further, the lint protrusion 822 may include an inclined surface extending outwardly upward with respect to the center of the inner filter 800, and a catch surface formed on the side facing the outside of the inner filter 800 and arranged relatively perpendicular to the reinforcing rib 8211.

The lint protrusions 822 formed on the reinforcing ribs 8211 may cause the lint moved by first brushes 875b and second brushes of the brush part 871b to be moved over the inclined surfaces to the outer side of the inner filter 800 when the brush part 871b is moved in the outward direction of the inner filter 800, When the brush part 871b is moved toward the center of the inner filter 800, it may be caught on the catch surfaces of the lint protrusions 822 to capture lint on both sides of the inner filter.

Here, the lint protrusions 822 are spaced apart at regular intervals along the reinforcing ribs 8211, and the first brushes 875b and second brushes of the brush part 871b may be disposed to correspond to the spacing defined by the lint protrusions 822. The first brushes 875b and second brushes of the brush part 871b will be described in more detail when the brush part 871b is described.

Just as the accommodation body 820, the support body 810 may be separable. The support body 810 may include a portion to which the first accommodation body 821 is coupled and a portion to which the second accommodation body is coupled. The portions are detachable from each other.

The inner filter 800 may further include a connector 840 connecting the first accommodation body 821 and the second accommodation body. The connector 840 may include a first hinge 841 provided on a lower portion of the first accommodation body 821 and a second hinge (not shown) provided on a lower portion of the second accommodation body. When the auxiliary mesh portion 83 provided in the first accommodation body 821, the first hinge 841 formed on the first accommodation body 821 may extend from a lower portion of the lower mesh portion 8223.

Here, the first hinge 841 and second hinge may extend from the lower portions of the first accommodation body 821 and second accommodation body to face each other. Further, the first hinge 841 may have a hinge groove 8411 formed therein, and the second hinge may have a hinge protrusion (not shown) inserted into the hinge groove 8411.

Thus, as the first hinge 841 and the second hinge of the connector 840 are connected, the first accommodation body 821 and the second accommodation body 823 may be rotatably coupled such that the hinge protrusion of the second accommodation body axially rotates with respect to the hinge groove 8411 of the first accommodation body 821.

The filtering space defined by the first accommodation body 821 and the second accommodation body may be further provided with a compressing part 860b arranged to compress the lint filtered in the filtering space against both sides of the filtering space and move the line while moving in the filtering space.

A movement groove 814 may be formed on one side of the support body 810 to allow the compressing part 860b to move in the longitudinal direction of the support body 810. The compressing part 860b may be movable to both sides in the longitudinal direction of the filtering space by moving along the movement groove 814.

Here, the movement groove 814 extends along the open surface 812 of the inner filter 800 in the longitudinal direction of the support body 810, and may be formed in an arc shape corresponding to the shape of the open surface 812. In other words, the filter part 700 may be mounted on the mounting portion 138 formed on the inlet 133 of the first support 130, and the open surface 812 of the inner filter 800 may be formed in an arc shape extending along the shape of the inlet 133.

Here, the lower portion of the first accommodation body 821 or the second accommodation body may be further provided with a lower mesh portion 8223 connecting the first accommodation body 821 and the second accommodation body while filtering lint moved to the lower portion of the accommodation body 820.

The lower mesh portion 8223 may be formed in the shape of a frame having a hollow. The hollow may include multiple lower reinforcing ribs arranged to maintain the shape of the lower mesh portion.

The lower mesh portion 8223 may include a lower frame 8223a disposed in a lower space defined by the first accommodation body 821 and the second accommodation body fastened to each other, and a lower mesh 8223b disposed in a lower open space in the lower frame 8223a. Here, the lower mesh 8223 may have a mesh of adifferent size than the mesh portions provided in the first accommodation body 821 and second accommodation.

The lower frame 8223a may be formed in a rectangular shape with an open top and bottom. The lower frame 8223a may be arranged on a lower end of the first accommodation body 821 to define the filtering space together with the first accommodation body 821 and the second accommodation body fastened to the first accommodation body 821.

The lower mesh portion 8223 may have a curved surface having a predetermined curvature to correspond to the radius of rotation of the brush part 871b, which will be described later. In other words, the movement groove 814 to which the brush part 871b is movably coupled may be formed in the shape of an arc centered on the inlet 133.

Accordingly, the brush part 871b movably coupled to the movement groove 814 may be rotated along the curvature of the movement groove. In other words, the brush part 871b moved along the movement groove 814 may be rotated to have a fan-shaped rotation area inside the accommodation body 820

If the lower mesh portion 8223 is formed in a straight line shape, the outer portion of the radius of rotation of the brush part 871b having the fan-shaped rotation area cannot remove lint by the brush part 871b. Therefore, the lower mesh portion 8223 may be formed to have a predetermined curvature corresponding to the radius of rotation of the brush part 871b.

In addition, multiple lower reinforcing ribs 8223c are formed on the inner side of the lower frame 8223a to maintain the shape of the lower frame 8223a. Further, the lower reinforcing ribs 8223c of the lower frame 8223a may be provided with lower lint protrusions 8223d that perform the same function as the lint protrusions 822 described above.

Here, the lower lint protrusions 8223d may extend from the top of the reinforcing rib 8211 into the first accommodation body 821 and second accommodation body and to the bottom of the brush body 874b of the brush part 871b described above.

Here, the lower lint protrusions 8223d may be spaced apart from each other by a predetermined distance in the longitudinal direction of each reinforcing rib 8211 of the lower frame 8223a. Further, the lower lint protrusions 8223d may include an inclined surface extending outwardly upward with respect to the center of the lower mesh portion 8223, and a catch surface formed on the side facing the outside of the inner filter 800 and arranged relatively perpendicular to the reinforcing ribs 8211.

The inclined surfaces and the catch surfaces formed on the lower lint protrusions 8223d have the same structure and function as the inclined surfaces 8221 and the catch surfaces 8222 of the lint protrusions 822 formed on the first accommodation body 821 in the one embodiment of the present disclosure. Therefore, a detailed description thereof will be skipped.

The compressing part 860b includes a movable part 862a coupled to slidably move along the shape of the movement groove 814 and partially exposed to the outside of the movement groove 814 formed in the support body 810, and a brush part 871b detachably coupled to a lower portion of the movable part 862b and extending downward into the filtering space to capture lint filtered by the mesh portions of the first accommodation body 821 and the second accommodation body.

Here, the movable part 862b is arranged to reciprocate along the movement groove 814 of the support body 810 in a fan shape insdie the accommodation body 820. The movable part 862b includes a rotation knob 864b provided at an upper end thereof to extend upward beyond the open surface 812 through the movement groove 814 of the support body 810, a guide groove (not shown) confiugred to guide arc-shaped rotation of the movable part 862b movably coupled to the movement groove 814 formed in the support body 810, and a brush fastening portion 867b disposed inside the accommodation body 820 to allow the brush part 871b to be fastened thereto.

As the user holds and moves the rotation knob 8641a, the movable part 862b is rotated in an arc shape along the movement groove 814, and the brush part fastened to the brush fastening portion 867b is rotated in a fan shape to capture the filtered lint on the mesh portions of the first accommodation body 821 and the second accommodation body.

The brush part 871b is coupled to the brush fastening portion 867b and may be moved in conjunction with the rotation of the movable part. Further, the brush part 871b may include an insertion portion 872b coupled to the brush fastening portion 867b, a brush body 874b extending from a lower end of the insertion portion 872b into the filtering space of the inner filter 800, and multiple brushes provided on the brush body 874b.

Here, the insertion portion 872b of the brush part 871b is detachably coupled to the brush fastening portion inside the inner filter, and may allow for replacement of the brush part 871b aged or damaged during long-term use of the compressing part 860b.

Here, the insertion portion 872b is formed in a shape corresponding to the insertion space of the brush fastening portion 867b, and the brush body 874b extends from the lower end of the insertion portion into the filtering space defined by the first accommodation body 821 and the second accommodation body of the inner filter 800.

The brush body 874b may have one surface facing the mesh portion of the first accommodation body 821 and an opposite surface facing the mesh portion of the second accommodation body 823. The one surface may be provided with first brushes 785b contacting the mesh portion of the first accommodation body 821, the opposite surface may be provided with second brushes (not shown) contacting the mesh portion of the second accommodation body.

The first brushes 875band second brushes of the brush body 874b described above may be integrally formed by insert injection in manufacturing the brush body 874b. Alternatively, they may be separately and detachably attached to the brush body 874b.

The first brushes 875band the second brushes may extend from the brush body 874a toward the inner side surfaces of the first accommodation body 821 and the second accommodation body. As the compressing part 860b moves, the first brushes 875band the second brushes may move the lint filtered on the surface of the mesh portion 830 of the first accommodation body 821 and the second accommodation body to the outer side of the inner filter.

As the compressing part 860b is reciprocated to both sides of the inner filter 800, the lint moved by the first brushes 875band the second brushes is moved to the outer side of the inner filter 800 beyond the inclined surfaces of the lint protrusions 822 formed on the reinforcing ribs of the first accommodation body 821 and the second accommodation body.

Here, the inclined surfaces of the lint protrusions 822 formed on the reinforcing ribs 8211 are inclined such that the height thereof increase as they extend toward the outer side of the inner filter. The lint moved by the first brushes 875bor the second brushes is loaded on the outer side beyond the inclined surfaces in the inner filter 800.

Further, when the compressing part 860b moved to the outer side of the inner filter 800 is moved to the center of the inner filter 800, the lint moved to the outer side of the inner filter 800 may be moved back to the center of the inner filter 800 by the movement of the first brushes 875band the second brushes.

The lint protrusions 822 formed on the reinforcing ribs 8211 have catch surfaces that are formed on the side facing away from the inclined surfaces and extend in a direction perpendicular to the reinforcing ribs 8211. When the compressing part 860b is moved to the center of the inner filter 800, the lint moved by the first brushes 875band the second brushes is caught on the catch surfaces and retained on the outer side of the inner filter 800.

When the first accommodation body 821 is provided with the lower mesh portion 8223, the brush body 874b of the brush part 871b may further be provided with a third brush 877b arranged to clean the filtered lint on the lower mesh portion 8223. The third brush 877b may extend from a lower end of the brush body 874b of the brush part 871b toward the lower mesh 8223b of the lower mesh portion 8223.

The third brush 877b may be integrally formed at the lower end of the brush body 874b of the brush part 871b by insert injection in manufacturing the brush body 874b. Alternatively, it may be detachably attached to the lower end of the brush body 874b.

Here, the lower lint protrusions 8223d are spaced apart from each other by a predetermined distance along the reinforcing ribs 8211, and the third brushes 877b of the brush part 871b may be disposed to correspond to the spacing formed by the lint protrusions 8223d.

Accordingly, when the brush part 871b is moved to the outer side of the inner filter 800, the lower lint protrusions 8223d formed on the reinforcing ribs 8211 of the lower frame 8223a may cause lint moved by the third brushes 877b of the brush part 871b to move over the inclined surfaces of the lower lint protrusions 8223d to the outer side of the lower mesh portion 8223. When the brush part 871b is moved toward the center of the lower mesh portion 8223, it may be caught on the catch surfaces of , the lower lint protrusions 8223d thereby capturing lint on both sides of the lower mesh portion 8223.

Additionally, the inner filter 800 according to this embodiment of the present disclosure may have the brush part 871b elastically supported toward the lower mesh portion 8223 with respect to the movable part 862b as in another embodiment of the present disclosure.

In other words, although not shown in the figures, the brush fastening portion 867b of the movable part 862b may be further provided with a separate tension spring (not shown) that elastically supports the insertion portion 872b of the brush part 871b toward the lower mesh portion 8223.

That is, the insertion portion 872b of the brush part 871b may be coupled to the brush fastening portion 867b of the movable part 862b to move in a radial direction of the movable part 862b, and a tension spring may be arranged between the brush fastening portion 867b and the insertion portion 872b to elastically support the insertion portion 872 in a direction away from the brush fastening portion 867b.

Thus, as the movable part 862b of the compressing part 860b rotates, the brush body 874b of the brush part 871b, which rotates along with the movable part 862b, may press against the lower mesh portion 8223 while capturing filtered lint on the lower mesh portion 8223 in the direction of the rotational movement of the compressing part.

In addition, the inner filter 800 according to this embodiment of the present disclosure may further include a lint accumulation indicator (not shown) disposed on the support body 810 to indicate the amount of lint compressed in the filtering space by the compressing part 860b. The lint accumulation indicator may have the same configuration and function as in the one embodiment of the present disclosure described above, and will not be described in detail.

As described above, the preferred embodiments of the present disclosure have been described in detail, but a person of ordinary skill in the technical field to which the present disclosure pertains may make various modifications to the present disclosure without departing from the spirit and scope of the present disclosure as defined in the attached claims or may implement the present disclosure by combining components of the embodiments with each other. Accordingly, future changes in the embodiments of the present disclosure will not deviate from the description of the present disclosure.

## Claims

1. A laundry treatment apparatus comprising:
a cabinet having an opening at a front side;
a drum provided with an inlet communicating with the opening and configured to accommodate laundry;
a driver accommodated inside the cabinet to rotate the drum;
a circulation duct arranged to circulate air, discharged from the inlet, outside the drum and resupply the air to the drum;
a heat supply part comprising one or more heat exchangers arranged inside the circulation duct to condense moisture from the air or heat the air;
a mounting portion arranged to guide air inside the drum into the circulation duct by allowing the inlet to communicate with the circulation duct;
a filter detachably provided on the mounting portion to filter out foreign substances from the air, the filter comprising:
an outer filter seated on the mounting portion to filter out foreign substances introduced into the circulation duct; and
an inner filter arranged to be at least partially accommodated in the outer filter and mounted on the mounting portion,
wherein the inner filter comprises:
an accommodation body comprising a mesh portion inserted into the outer filter and configured to filter out introduced lint;
a support body arranged on the accommodation body and mounted on the outer filter, the support body extending in an arc shape according to a shape of the inlet; and
a compression part arranged on the support body to be reciprocally movable and configured to collect lint filtered in the accommodation body,
wherein the compression part comprises:
a movable part reciprocally moved along a longitudinal direction of the support body; and
a brush part detachably coupled to the movable part on an inner side of the support body and rotated inside the accommodation body according to rotation of the movable part.

2. The laundry treatment apparatus of claim 1, wherein the support body comprises:
an open surface allowing air and lint to be introduced into the support body therethrough;
a mesh-shaped blocking rib provided on the open surface; and
a movement groove formed on one side of the support body to guide reciprocating movement of the compression part along a shape of the support body.

3. The laundry treatment apparatus of claim 2, wherein the movable part comprises:
a guide groove slidably coupled to the movement groove;
a rotation knob extending from an upper portion of the movable part to an outer side of the support body; and
a brush fastening portion provided at a lower portion of the movable part to allow the brush part to be fastened thereto.

4. The laundry treatment apparatus of claim 3, wherein the brush part comprises:
an insertion portion inserted into and coupled to the brush fastening portion;
a brush body extending from the insertion portion into the accommodation body;
a first brush disposed on one surface of the brush body; and
a second brush disposed on an opposite surface of the brush body.

5. The laundry treatment apparatus of claim 4, wherein the insertion portion is inserted into the brush fastening portion to be movable in a radial direction of the movable part,
the laundry treatment apparatus further comprising:
a spring arranged between the brush fastening portion and the insertion portion to elastically support the brush part in the radial direction of the movable part.

6. The laundry treatment apparatus of claim 4, wherein the accommodation body comprises:
a first accommodation body provided with a mesh portion facing the first brush; and
a second accommodation body provided with a mesh portion facing the second brush,
wherein each of the first and second accommodation bodies is provided with a plurality of reinforcing ribs arranged in a direction parallel to the brush part to enhance strength.

7. The laundry treatment apparatus of claim 6, wherein the reinforcing ribs comprise a plurality of lint protrusions arranged facing the first and second brushes to restrict movement of lint moved by the first and second brushes.

8. The laundry treatment apparatus of claim 7, wherein the lint protrusions are spaced apart from each other by a predetermined distance in a longitudinal direction of the reinforcing ribs,
wherein the first and second brushes are spaced apart from each other by a predetermined distance corresponding to the distance between the lint protrusions.

9. The laundry treatment apparatus of claim 8, wherein each of the lint protrusions comprises:
an inclined surface extending outwardly upward with respect to a center of the accommodation body; and
a catch surface extending perpendicular to the reinforcing ribs with respect to an outer side of the accommodation body.

10. The laundry treatment apparatus of claim 6, wherein a lower portion of the first accommodation body comprises a lower mesh portion connecting the first accommodation body and the second accommodation body.

11. The laundry treatment apparatus of claim 10, wherein the brush body further comprises a third brush extending from a lower portion thereof to the lower mesh portion.

12. The laundry treatment apparatus of claim 10, wherein the lower mesh portion comprises:
a lower frame having a lower mesh and connecting the first and second accommodation bodies;
a lower reinforcing rib arranged to reinforce the lower frame; and
a lower lint protrusion formed on the lower reinforcing rib to restrict movement of lint moved by the third brush.

13. The laundry treatment apparatus of claim 6, wherein the reinforcing ribs are formed to extend in a radial direction with respect to a center of rotation of the movable part to correspond rotation of the brush part.

14. The laundry treatment apparatus of claim 1, wherein the outer filter comprises:
a seating body seated on the mounting portion;
an insertion body extending from the seating body and provided with a mesh member to filter foreign substances, the insertion body having at least a portion inserted into the mounting portion; and
an elastic member coupled to the seating body and configured to separate the seating body from the mounting portion.

15. A laundry treatment apparatus comprising:
a cabinet having an opening at a front side;
a drum provided with an inlet communicating with the opening and configured to accommodate laundry;
a driver accommodated inside the cabinet to rotate the drum;
a circulation duct arranged to circulate air, discharged from the inlet, outside the drum and resupply the air to the drum;
a heat supply part comprising one or more heat exchangers arranged inside the circulation duct to condense moisture from the air or heat the air;
a mounting portion arranged to guide air inside the drum into the circulation duct by allowing the inlet to communicate with the circulation duct;
a filter detachably provided on the mounting portion to filter out foreign substances from the air, the filter comprising:
an outer filter seated on the mounting portion to filter out foreign substances introduced into the circulation duct; and
an inner filter arranged to be at least partially accommodated in the outer filter and mounted on the mounting portion,
wherein the inner filter comprises:
an accommodation body comprising a mesh portion inserted into the outer filter and configured to filter out introduced lint;
a support body arranged on the accommodation body and mounted on the outer filter, and in which a movement groove is formed; and
a compression part arranged on the support body to be reciprocally movable and configured to collect lint filtered in the accommodation body,
wherein the compression part comprises:
a movable part arranged to move along the movement groove;
a movement shaft provided on an inner side of the support body and disposed in a longitudinal direction of the support body; and
a brush part configured to reciprocally move inside the accommodation body along the movement shaft in response to movement of the movable part.

16. The laundry treatment apparatus of claim 15, wherein the movable part comprises:
a movement guide moved along the movement shaft inside the support body;
a movement knob provided at an upper portion of the movement guide and extending to an outside of the support body through the movement groove; and
a lifting guide coupled to a lower portion of the movement guide so as to be vertically movable.

17. The laundry treatment apparatus of claim 16, wherein the movement guide comprises:
a through-hole configured to receive the movement shaft movably inserted thereinto; and
a lifting space formed in a lower portion of the movement guide to allow the lifting guide to vertically movably fastened thereto.

18. The laundry treatment apparatus of claim 17, wherein the lifting guide is provided with a fastening space vertically movably disposed in the lifting space,
wherein the brush part is detachably fastened to the fastening space.

19. The laundry treatment apparatus of claim 18, wherein the movable part further comprises a fixing guide hingedly coupled to the movement guide to prevent the lifting guide from being separated.

20. The laundry treatment apparatus of claim 19, wherein the fixing guide comprises:
a hinge hingedly coupled to the movement guide; and
a compressing part extending from the hinge toward the lifting guide to prevent the lifting guide from being separated.

21. The laundry treatment apparatus of claim 18, wherein the brush part comprises:
a fastening part detachably inserted into the fastening space;
a brush body extending from the fastening part into the accommodation body;
a first brush disposed on one surface of the brush body; and
a second brush disposed on an opposite surface of the brush body.

22. The laundry treatment apparatus of claim 21, wherein the accommodation body comprises:
a first accommodation body provided with a mesh portion facing the first brush; and
a second accommodation body provided with a mesh portion facing the second brush,
wherein each of the first and second accommodation bodies is provided with a plurality of reinforcing ribs arranged in a direction parallel to the brush part to enhance strength.

23. The laundry treatment apparatus of claim 22, wherein the reinforcing ribs comprise a plurality of lint protrusions arranged facing the first and second brushes to restrict movement of lint moved by the first and second brushes.

24. The laundry treatment apparatus of claim 23, wherein the lint protrusions are spaced apart from each other by a predetermined distance in a longitudinal direction of the reinforcing ribs,
wherein the first and second brushes are spaced apart from each other by a predetermined distance corresponding to the distance between the lint protrusions.

25. The laundry treatment apparatus of claim 23, wherein each of the lint protrusions comprises:
an inclined surface extending outwardly upward with respect to a center of the accommodation body; and
a catch surface extending perpendicular to the reinforcing ribs with respect to an outer side of the accommodation body.

26. The laundry treatment apparatus of claim 21, wherein the inner filter further comprises:
an auxiliary filter disposed in a lower portion of the accommodation space in a longitudinal direction of the accommodation space to filter out lint,
wherein the brush part further comprises a third brush extending toward the auxiliary filter.

27. The laundry treatment apparatus of claim 26, wherein the auxiliary filter comprises:
an auxiliary filter frame provided with an auxiliary filter mesh, the auxiliary filter frame corresponding to an inner lower surface of the accommodation space;
a reinforcing rib arranged to reinforce the auxiliary filter frame; and
a lower lint protrusion formed on the reinforcing rib to restrict movement of lint moved by the third brush.

28. A laundry treatment apparatus comprising:
a cabinet having an opening at a front side;
a drum provided with an inlet communicating with the opening and configured to accommodate laundry;
a driver accommodated inside the cabinet to rotate the drum;
a circulation duct arranged to circulate air, discharged from the inlet, outside the drum and resupply the air to the drum;
a heat supply part comprising one or more heat exchangers arranged inside the circulation duct to condense moisture from the air or heat the air;
a mounting portion arranged to guide air inside the drum into the circulation duct by allowing the inlet to communicate with the circulation duct;
a filter detachably provided on the mounting portion to filter out foreign substances from the air, the filter comprising:
an outer filter seated on the mounting portion to filter out foreign substances introduced into the circulation duct; and
an inner filter arranged to be at least partially accommodated in the outer filter and mounted on the mounting portion,
wherein the inner filter comprises:
an accommodation body comprising a mesh portion inserted into the outer filter and configured to filter out introduced lint;
a support body arranged on the accommodation body and mounted on the outer filter; and
a compression part arranged on the support body to be reciprocally movable and configured to collect lint filtered in the accommodation body,
wherein the compression part comprises:
a movement shaft assembly disposed in the accommodation space in a longitudinal direction of the support body;
a rotation guide arranged on the support body to rotate in an arc shape along a shape of the support body;
a lifting guide reciprocally movable along the movement shaft assembly and vertically movable with respect to the movement shaft assembly according to movement of the rotation guide; and
a brush part provided on the lifting guide to reciprocate inside the accommodation body along the lifting guide.

29. The laundry treatment apparatus of claim 28, wherein the movement shaft assembly comprises:
a first shaft support fixed on one side in the accommodation space;
a second shaft support fixed on an opposite side in the accommodation space; and
a movement shaft connecting the first and second shaft supports,
wherein the lifting guide is movably fastened to the movement shaft.

30. The laundry treatment apparatus of claim 29, wherein the rotation guide comprises:
a guide groove slidably coupled to the movement groove; and
a rotation knob extending from an upper portion of the rotation guide to an outer side of the support body.

31. The laundry treatment apparatus of claim 30, wherein the lifting guide comprises:
a lifting slit formed at an upper side to slide along the movement shaft and move vertically with respect to the shaft; and
a lifting space formed at a lower side to allow the brush part to be vertically movably inserted thereinto.

32. The laundry treatment apparatus of claim 31, wherein one surface of the rotation guide facing the lifting guide is provided with a rotation shaft groove,
wherein the lifting guide comprises a rotation shaft rotatably coupled to the rotation shaft groove,
wherein, based on the rotation guide being rotated, the lifting guide rotates while vertically moving with respect to the movement shaft.

33. The laundry treatment apparatus of claim 31, wherein the brush part comprises:
an insertion portion inserted into the lifting space;
a brush body extending from the insertion portion into the accommodation body;
a first brush disposed on one surface of the brush body; and
a second brush disposed on an opposite surface of the brush body.

34. The laundry treatment apparatus of claim 33, wherein the lifting guide comprises:
a brush slit allowing the first and second brushes to move during vertical movement of the lifting guide.

35. The laundry treatment apparatus of claim 33, wherein the inner filter further comprises:
an auxiliary filter disposed in a lower portion of the accommodation space in a longitudinal direction of the accommodation space to filter out lint,
wherein the brush part further comprises a third brush extending toward the auxiliary filter.

36. The laundry treatment apparatus of claim 33, wherein the accommodation body comprises:
a first accommodation body provided with a mesh portion facing the first brush; and
a second accommodation body provided with a mesh portion facing the second brush,
wherein each of the first and second accommodation bodies is provided with a plurality of reinforcing ribs arranged in a direction parallel to the brush part to enhance strength.

37. The laundry treatment apparatus of claim 36, wherein the reinforcing ribs comprise a plurality of lint protrusions arranged facing the first and second brushes to restrict movement of lint moved by the first and second brushes.

38. The laundry treatment apparatus of claim 37, wherein the lint protrusions are spaced apart from each other by a predetermined distance in a longitudinal direction of the reinforcing ribs,
wherein the first and second brushes are spaced apart from each other by a predetermined distance corresponding to the distance between the lint protrusions.

39. The laundry treatment apparatus of claim 38, wherein each of the lint protrusions comprises:
an inclined surface extending outwardly upward with respect to a center of the accommodation body; and
a catch surface extending perpendicular to the reinforcing ribs with respect to an outer side of the accommodation body.
